# EUROPEAN PATENT APPLICATION

(11) **EP 4 756 855 A1**
(43) Date of publication of application: **10.06.2026**
(21) Application number: 24881616.7
(22) Date of filing: 23.10.2024
(51) Int. Cl.: H01H 13/705

(54) **KEYBOARD AND ELECTRONIC DEVICE**

(30) Priority: 25.10.2023 CN 202311398593; 17.01.2024 CN 202410071591
(71) Applicant: HUAWEI TECHNOLOGIES CO., LTD., Shenzhen, Guangdong 518129 (CN)
(72) Inventor: LIAO, Changliang, Shenzhen, Guangdong 518129 (CN); YANG, Shaoyong, Shenzhen, Guangdong 518129 (CN); TAMURA, Fumio, Shenzhen, Guangdong 518129 (CN)
(74) Representative: MERH-IP Matias Erny Reichl Hoffmann Patentanwälte PartG mbB
(86) International application number: PCT/CN2024/126609
(87) International publication number: WO 2025/087251

(57) **Abstract**

This application provides a keyboard and an electronic device. The keyboard includes a housing, a circuit board, and a plurality of keys. The circuit board is mounted on the housing, the plurality of keys are mounted on the circuit board, and the plurality of keys each include an unpressed state and a triggered state. The plurality of keys include a first key and a second key. When both the first key and the second key are in the unpressed state, an included angle between a first central axis and a second central axis is a, and a satisfies 0°≤a<M₁, where 0°<M₁≤10°. In this case, orientations of a top surface of the first key and a top surface of the second key are approximately the same. When both the first key and the second key are in the triggered state, an included angle between a first central axis and a second central axis is b, and b satisfies: b satisfies: b≥M₁. In this case, orientations of a top surface of the first key and a top surface of the second key are different. In this way, the keyboard can conform to ergonomics, have a relatively good comfortable feeling during long-term use, and improve keyboard space utilization.

## Description

This application claims priorities to Chinese Patent Application No. 202311398593.7, filed with the China National Intellectual Property Administration on October 25, 2023, and entitled "MECHANICAL KEYBOARD", and to Chinese Patent Application No. 202410071591.5, filed with the China National Intellectual Property Administration on January 17, 2024, and entitled "KEYBOARD AND ELECTRONIC DEVICE", both of which are incorporated herein by reference in their entireties.

### TECHNICAL FIELD

This application relates to the keyboard field, and in particular, to a keyboard and an electronic device.

### BACKGROUND

With development of science and technology and requirements of the electronic device market, keyboards, as a main means for information input, attract more attention from many manufacturers. In a conventional keyboard, all keys/buttons of the keyboard move up and down horizontally in a clicking/tapping process, and all rows of keys tilt at a same angle. This easily causes wrist fatigue after long-term use. In another conventional keyboard, while each row of keys has a different tapping angle, providing a comfortable feeling for long-term use, its structurally inefficient design leads to wasted space, making it unsuitable for thinner tablet computer or notebook computer, and making a screen cluttered. Therefore, it is urgent to provide a keyboard that can conform to ergonomics, have a relatively good comfortable feeling during long-term use, and improve keyboard space utilization.

### SUMMARY

An objective of this application is to provide an electronic device and a keyboard that can conform to ergonomics, have a relatively good comfortable feeling during long-term use, and improve keyboard space utilization.

According to a first aspect, this application provides a keyboard. The keyboard includes a housing, a circuit board, and a plurality of keys, the circuit board is mounted on the housing, the plurality of keys are mounted on the circuit board, and the plurality of keys each include an unpressed state and a triggered state.

The plurality of keys include a first key and a second key, a first central axis of the first key is perpendicular to a top surface of the first key and passes through a center of the top surface of the first key, and a second central axis of the second key is perpendicular to a top surface of the second key and passes through a center of the top surface of the second key.

When both the first key and the second key are in the unpressed state, an included angle between the first central axis and the second central axis is a, and a satisfies: 0°≤a<M₁, where 0°<M₁≤10°. For example, M₁ may be equal to 1°, 2°, 3°, 4°, 5°, 6°, 7°, 8°, 9°, 10°, or the like. For example, 0°≤a<3°.

When both the first key and the second key are in the triggered state, an included angle between the first central axis and the second central axis is b, and b satisfies: b satisfies: b≥M₁. For example, b≥3°.

It may be understood that, through design, when both the first key and the second key are in the unpressed state, a satisfies: 0°≤a<M₁, where 0°<M₁≤10°. Therefore, when both the first key and the second key are in the unpressed state, the first central axis of the first key is approximately parallel to the second central axis of the second key. In this case, when both the first key and the second key are in the unpressed state, the top surface of the first key is approximately parallel to the top surface of the second key, and orientations of the top surface of the first key and the top surface of the second key are approximately the same. In this way, in comparison with a solution in which orientations of the top surface of the first key and the top surface of the second key are different when both the first key and the second key are in the unpressed state, in this implementation, when both the first key and the second key are in the unpressed state, the orientations of the top surface of the first key and the top surface of the second key are approximately the same, so that the first key and the second key occupy relatively consistent space in a Z-axis direction. The first key and the second key do not easily cause wasted space in the Z-axis direction due to uneven top surfaces of the first key and the second key, thereby facilitating thinning of the keyboard.

In addition, when both the first key and the second key are in the unpressed state, the orientations of the top surface of the first key and the top surface of the second key are approximately the same, so that there is good appearance consistency between the first key and the second key, and an appearance of the keyboard is neat, thereby helping improve user experience of the keyboard.

It may be understood that, through design, when both the first key and the second key are in the triggered state, b satisfies: b≥M₁, so that when both the first key and the second key are in the triggered state, the first central axis of the first key intersects the second central axis of the second key. In this case, when both the first key and the second key are in the triggered state, the top surface of the first key intersects (that is, is not parallel to) the top surface of the second key, that is, orientations of the top surface of the first key and the top surface of the second key are different. In this way, in comparison with a solution in which orientations of the top surface of the first key and the top surface of the second key are the same when both the first key and the second key are in the triggered state, in this implementation, because the orientations of the top surface of the first key and the top surface of the second key are different, the first key and the second key can not only satisfy user's comfortable feelings of tapping at different positions, but also resolve a problem that a wrist of the user is fatigued due to a same bending degree at different positions. In this case, a disposing manner of the first key and the second key can satisfy an ergonomic theory, and user experience is better.

In a possible implementation, when both the first key and the second key are in the unpressed state, the top surface of the first key is flush with the top surface of the second key. In this way, the first key and the second key occupy relatively consistent space in the Z-axis direction, thereby facilitating thinning of the keyboard.

In a possible implementation, a central axis of the circuit board is perpendicular to a top surface of the circuit board and passes through a center of the top surface of the circuit board, and the top surface of the circuit board is a surface that is of the circuit board and that faces the keys.

When both the first key and the second key are in the triggered state, the top surface of the second key tilts in a direction close to the first key, an included angle between the first central axis and the central axis is A₁, an included angle between the second central axis and the central axis is A₂, and A₁ and A₂ satisfy: A₂>A₁.

It may be understood that, through design, when both the first key and the second key are in the triggered state, the top surface of the second key tilts in the direction close to the first key, and A₂>A₁, so that when the user taps different positions of the keyboard, the wrist is not prone to fatigue, thereby greatly improving user experience.

In a possible implementation, A₁ and A₂ satisfy: 0°≤A₁<3° and A₂≥3°. In this way, it can be ensured that A₂>A₁. In addition, because A₁ can satisfy: 0°≤A₁<3°, the first central axis of the first key is approximately parallel to the central axis of the circuit board. In this case, the first key does not occupy large space in the Z-axis direction, thereby helping improve space utilization of the keyboard.

In a possible implementation, the plurality of keys further include a third key, and the third key is spaced apart from both the first key and the second key.

A third central axis of the third key is perpendicular to a top surface of the third key and passes through a center of the top surface of the third key.

When both the first key and the third key are in the unpressed state, an included angle between the third central axis and the first central axis is c, and c satisfies: 0°≤c<M₂, where 0°<M₂≤10°. For example, M₂ may be equal to 1°, 2°, 3°, 4°, 5°, 6°, 7°, 8°, 9°, 10°, or the like. For example, 0°≤c<3°.

When both the first key and the third key are in the triggered state, an included angle between the third central axis and the first central axis is d, and d satisfies: d≥M₂. For example, d≥3°.

It may be understood that, through design, when both the first key and the third key are in the unpressed state, c satisfies: 0°≤c<M₂, where 0°<M₂≤10°. Therefore, when both the first key and the third key are in the unpressed state, the first central axis of the first key is approximately parallel to the third central axis of the third key. In this case, when both the first key and the third key are in the unpressed state, the top surface of the first key is approximately parallel to the top surface of the third key, that is, orientations of the top surface of the first key and the top surface of the third key are approximately the same. In addition, when both the first key and the second key are in the unpressed state, the orientations of the top surface of the first key and the top surface of the second key are approximately the same. In this way, when the first key, the second key, and the third key are all in the unpressed state, the orientations of the top surface of the first key, the top surface of the second key, and the top surface of the third key are approximately the same. The first key, the second key, and the third key occupy relatively consistent space in the Z-axis direction. The first key, the second key, and the third key do not easily cause wasted space in the Z-axis direction due to uneven top surfaces of the first key, the second key, and the third key, thereby facilitating thinning of the keyboard.

In addition, when the first key, the second key, and the third key are all in the unpressed state, the orientations of the top surface of the first key, the top surface of the second key, and the top surface of the third key are approximately the same, so that there is good appearance consistency between the first key, the second key, and the third key, and an appearance of the keyboard is neat, thereby helping improve user experience of the keyboard.

It may be understood that, through design, when both the first key and the third key are in the triggered state, d satisfies: d≥M₂, so that when both the first key and the third key are in the triggered state, the first central axis of the first key intersects the third central axis of the third key. In this case, when both the first key and the third key are in the triggered state, the top surface of the first key intersects (that is, is not parallel to) the top surface of the third key, that is, orientations of the top surface of the first key and the top surface of the third key are different. The first key and the third key can not only satisfy user's comfortable feelings of tapping at different positions, but also resolve a problem that the wrist of the user is fatigued due to a same bending degree at different positions. A disposing manner of the first key and the third key can satisfy an ergonomic theory, and user experience is better.

For example, when both the first key and the third key are in the unpressed state, the top surface of the first key is flush with the top surface of the third key. In this way, the first key and the third key occupy relatively consistent space in the Z-axis direction, thereby facilitating thinning of the keyboard.

In a possible implementation, the third key is located on a side that is of the second key and that is away from the first key.

When the first key, the second key, and the third key are all in the triggered state, the top surface of the third key tilts in a direction close to the first key, and b and d satisfy: d>b.

It may be understood that, because b and d satisfy: d>b, a tilt angle of the third key is greater than a tilt angle of the second key. In this case, when the first key is close to the user and the third key is away from the user, or the first key is away from the user and the third key is close to the user, the first key, the second key, and the third key can not only satisfy user's comfortable feelings of tapping at different far and near positions, but also resolve a problem that the wrist of the user is fatigued due to a same bending degree at different far and near positions. A disposing manner of the first key and the third key can satisfy an ergonomic theory, and user experience is better.

In a possible implementation, a central axis of the circuit board is perpendicular to a top surface of the circuit board and passes through a center of the top surface of the circuit board, and the top surface of the circuit board is a surface that is of the circuit board and that faces the keys.

When both the second key and the third key are in the triggered state, an included angle between the second central axis and the central axis is A₂, an included angle between the third central axis and the central axis is A₃, and A₂ and A₃ satisfy: A₃>A₂. In this way, a tilt angle of the third key is greater than a tilt angle of the second key. In this case, when the first key is close to the user and the third key is away from the user, or the first key is away from the user and the third key is close to the user, the first key, the second key, and the third key can not only satisfy user's comfortable feelings of tapping at different far and near positions, but also resolve a problem that the wrist of the user is fatigued due to a same bending degree at different far and near positions. A disposing manner of the first key and the third key can satisfy an ergonomic theory, and user experience is better.

In a possible implementation, the third key is located on a side that is of the first key and that is away from the second key.

When both the first key and the third key are in the triggered state, the top surface of the third key tilts in a direction close to the first key, an included angle between the first central axis and the central axis is A₁, an included angle between the third central axis and the central axis is A₃, and A₁ and A₃ satisfy: A₃>A₁.

It may be understood that, because A₁ and A₃ satisfy: A₃>A₁, a tilt angle of the third key is greater than a tilt angle of the first key. In this case, when the third key is close to the user, or the third key is away from the user, the first key, the second key, and the third key can not only satisfy user's comfortable feelings of tapping at different far and near positions, but also resolve a problem that the wrist of the user is fatigued due to a same bending degree at different far and near positions. A disposing manner of the first key and the third key can satisfy an ergonomic theory, and user experience is better.

In a possible implementation, the first key includes a first keycap, a first connecting piece, and a second connecting piece.

The first connecting piece includes a first rotating end and a first movable end, the first rotating end of the first connecting piece is rotatably connected to the circuit board, the first movable end of the first connecting piece is movably connected to the first keycap, the second connecting piece includes a second rotating end and a second movable end, the second rotating end of the second connecting piece is rotatably connected to the circuit board, and the second movable end of the second connecting piece is movably connected to the first keycap.

The first rotating end of the first connecting piece includes a first gear portion, the second rotating end of the second connecting piece includes a second gear portion, the first gear portion of the first connecting piece is engaged with the second gear portion of the second connecting piece, a diameter of a pitch circle of the first gear portion of the first connecting piece is a first diameter, a diameter of a pitch circle of the second gear portion of the second connecting piece is a second diameter, and a ratio of a largest value to a smallest value in the first diameter and the second diameter is a first value when the first diameter is not equal to the second diameter, or a ratio of the first diameter to the second diameter is a first value when the first diameter is equal to the second diameter.

The second key includes a second keycap, a third connecting piece, and a fourth connecting piece, the third connecting piece includes a first rotating end and a first movable end, the first rotating end of the third connecting piece is rotatably connected to the circuit board, the first movable end of the third connecting piece is movably connected to the second keycap, the fourth connecting piece includes a second rotating end and a second movable end, the second rotating end of the fourth connecting piece is rotatably connected to the circuit board, and the second movable end of the fourth connecting piece is movably connected to the second keycap.

The first rotating end of the third connecting piece includes a first gear portion, the second rotating end of the fourth connecting piece includes a second gear portion, the first gear portion of the third connecting piece is engaged with the second gear portion of the fourth connecting piece, a diameter of a pitch circle of the first gear portion of the third connecting piece is a third diameter, a diameter of a pitch circle of the second gear portion of the fourth connecting piece is a fourth diameter, the third diameter is not equal to the fourth diameter, a ratio of a largest value to a smallest value in the third diameter and the fourth diameter is a second value, and the second value is greater than the first value.

It may be understood that the diameter of the pitch circle of the first gear portion of the first connecting piece of the first key is the first diameter. The diameter of the pitch circle of the second gear portion of the second connecting piece of the first key is the second diameter. The ratio of the largest value to the smallest value in the first diameter and the second diameter is the first value when the first diameter is not equal to the second diameter. For example, the first diameter is 2 millimeters, and the second diameter is 5 millimeters. In this case, the first diameter is the smallest value. The second diameter is the largest value. In this case, the first value is a ratio of 5 to 2, that is, 2.5. The ratio of the first diameter to the second diameter is the first value when the first diameter is equal to the second diameter. This implementation is described by using an example in which the first diameter is equal to the second diameter. In addition, the diameter of the pitch circle of the first gear portion of the third connecting piece of the second key is the third diameter. The diameter of the pitch circle of the second gear portion of the fourth connecting piece is the fourth diameter. The third diameter is not equal to the fourth diameter, and the ratio of the largest value to the smallest value in the third diameter and the fourth diameter is the second value. For example, the third diameter is 2 millimeters, and the fourth diameter is 6 millimeters. In this case, the third diameter is the smallest value. The fourth diameter is the largest value. In this case, the second value is a ratio of 6 to 2, that is, 3. In this implementation, the second value is greater than the first value.

It may be understood that, the second value is set to be greater than the first value, so that when both the first key and the second key are in the triggered state, tilt angles of the first key and the second key relative to the circuit board are different, and the tilt angle of the second key is greater than that of the first key. In this way, the included angle b between the first central axis of the first key and the second central axis of the second key is relatively large, so that the orientations of the top surface of the first key and the top surface of the second key are different. In this case, when both the first key and the second key are in the triggered state, a disposing manner of the first key and the second key can satisfy an ergonomic theory, and user experience is better. It may be understood that, when a difference between the second value and the first value is greater, the second key has a larger tilt angle than the first key. In this way, the included angle b between the first central axis of the first key and the second central axis of the second key is larger. When a difference between the second value and the first value is smaller, the tilt angle of the first key is closer to the tilt angle of the second key. In this way, the included angle b between the first central axis of the first key and the second central axis of the second key is smaller.

In a possible implementation, the first diameter is equal to the second diameter, and the third diameter is less than the fourth diameter.

In a possible implementation, the first connecting piece is provided with a first avoidance hole, and the first avoidance hole divides the first gear portion of the first rotating end of the first connecting piece into a first gear sub-portion and a second gear sub-portion.

The second connecting piece is provided with a second avoidance hole, and the second avoidance hole divides the second gear portion of the second rotating end of the second connecting piece into a first gear sub-portion and a second gear sub-portion.

The first avoidance hole of the first connecting piece is in communication with the second avoidance hole of the second connecting piece, the first gear sub-portion of the first connecting piece is engaged with the first gear sub-portion of the second connecting piece, and the second gear sub-portion of the first connecting piece is engaged with the second gear sub-portion of the second connecting piece.

It may be understood that space surrounded by the first avoidance hole and the second avoidance hole may be used to provide avoidance space for another component of the first key or another component of the keyboard, to avoid mutual interference between the another component of the first key or the another component of the keyboard and the first connecting piece or the second connecting piece.

In a possible implementation, the first gear sub-portion of the first connecting piece includes a first tooth and a second tooth, the second tooth of the first connecting piece is located on a side that is of the first tooth of the first connecting piece and that is close to the second gear sub-portion of the first connecting piece, the first gear sub-portion of the second connecting piece includes a first tooth and a second tooth, and the second tooth of the second connecting piece is located on a side that is of the first tooth of the second connecting piece and that is close to the second gear sub-portion of the second connecting piece.

The first tooth of the first connecting piece is engaged with the first tooth of the second connecting piece, the second tooth of the first connecting piece is engaged with the second tooth of the second connecting piece, and a connection line between the first tooth and the second tooth of the first connecting piece intersects a connection line between the first tooth and the second tooth of the second connecting piece.

In a possible implementation, the first gear sub-portion of the first connecting piece includes a first tooth, and the first gear sub-portion of the second connecting piece includes a first tooth and a second tooth that are spaced apart from and opposite to each other.

The first tooth of the first connecting piece is located between the first tooth and the second tooth of the second connecting piece.

It may be understood that, through design, the connection line between the first tooth and the second tooth of the first connecting piece intersects the connection line between the first tooth and the second tooth of the second connecting piece, so that the first gear portion of the first connecting piece and the second gear portion of the second connecting piece are arranged in a staggered manner. In this way, in the Z-axis direction, thicknesses of the first gear portion of the first connecting piece and the second gear portion of the second connecting piece are smaller, thereby facilitating thinning of the first key.

In a possible implementation, the first connecting piece includes a first connecting section, and the first connecting section of the first connecting piece connects the first rotating end of the first connecting piece to the first movable end of the first connecting piece.

The second connecting piece includes a second connecting section, and the second connecting section of the second connecting piece connects the second rotating end of the second connecting piece to the second movable end of the second connecting piece.

The first key further includes a first elastic piece, the first elastic piece connects the first connecting section of the first connecting piece to the second connecting section of the second connecting piece, and the first elastic piece is in a stretched state.

It may be understood that the first elastic piece may be configured to apply a pulling force to the first connecting piece and the second connecting piece. When the first key is switched from the unpressed state to the triggered state, the first elastic piece may apply an acting force in a positive direction of the Z-axis to the first keycap through the first connecting piece and the second connecting piece. In this case, in a process of pressing the first keycap to move in a negative direction of the Z-axis, an acting force applied by the first elastic piece to the first keycap needs to be overcome first, thereby helping improve a comfortable feeling of the user in the process of pressing the first keycap. Even when the first key is in the unpressed state, the first elastic piece may be in a stretched state, and the first elastic piece may apply an acting force in the positive direction of the Z-axis to the first keycap through the first connecting piece and the second connecting piece. In this case, when the user accidentally touches the first keycap, the first keycap does not immediately move in the negative direction of the Z-axis and squeeze a triggering end of the circuit board, causing the circuit board to generate an electrical signal.

In a possible implementation, a first center line of the first elastic piece passes through a center of the first elastic piece and is parallel to a length extension direction of the first elastic piece.

The first center line and the top surface of the circuit board form an included angle when the first key is in the triggered state, and the top surface of the circuit board is the surface that is of the circuit board and that faces the keys.

It may be understood that, because the first center line of the first elastic piece is not parallel to the top surface of the circuit board, an elastic force applied by the first elastic piece to the first connecting piece and the second connecting piece may generate a component force in the positive direction of the Z-axis. In this case, the component force may enable the first rotating end of the first connecting piece to rotate relative to the first fastening base and the second fastening base, and enable the second rotating end of the second connecting piece to rotate relative to the first fastening base and the second fastening base, so that the first key can be switched from the triggered state to the unpressed state.

In a possible implementation, the first movable end of the first connecting piece is slidably connected to and rotatable relative to the first keycap.

A center of rotation of the first connecting piece relative to the circuit board is a first rotation center, a center of rotation of the first connecting piece relative to the first keycap is a second rotation center, a distance between the first rotation center and a bottom surface of the circuit board is a first height H₁, a distance between the second rotation center and the bottom surface of the circuit board is a second height H₂, and the bottom surface of the circuit board is a surface that is of the circuit board and that faces away from the keys.

When the first key is in the triggered state, H₁ and H₂ satisfy: H₁<H₂.

It may be understood that, when the first key is in the triggered state, the first height H₁ is less than the second height H₂, that is, H₁ and H₂ satisfy: H₁<H₂. In this case, an elastic force applied by the first elastic piece to the first connecting piece may generate a component force in the positive direction of the Z-axis. The component force may enable the first rotating end of the first connecting piece to rotate relative to the first fastening base and the second fastening base. Because the first gear portion of the first rotating portion of the first connecting piece is engaged with the second gear portion of the second rotating portion of the second connecting piece, the first rotating end of the first connecting piece and the second rotating portion of the second connecting piece may rotate synchronously, that is, the second rotating end of the second connecting piece may rotate relative to the first fastening base and the second fastening base, so that the first key can be switched from the triggered state to the unpressed state.

In a possible implementation, the keyboard includes a first fastening base and a second fastening base, and the first fastening base and the second fastening base are fastened on the circuit board in a spaced manner.

The first rotating end of the first connecting piece includes a first rotating portion and a second rotating portion, the first rotating portion of the first connecting piece protrudes from a first end face of the first gear portion of the first connecting piece, the second rotating portion of the first connecting piece protrudes from a second end face of the first gear portion of the first connecting piece, and the first end face and the second end face of the first gear portion of the first connecting piece face away from each other.

The first rotating portion of the first rotating end of the first connecting piece is rotatably connected to the first fastening base, and the second rotating portion of the first rotating end of the first connecting piece is rotatably connected to the second fastening base.

It may be understood that the first connecting piece may be rotatably connected to the circuit board through the first fastening base and the second fastening base. The second connecting piece may be rotatably connected to the circuit board through the first fastening base and the second fastening base. The first connecting piece and the second connecting piece may be first assembled on the first fastening base and the second fastening base, and then the first fastening base and the second fastening base are fastened on the circuit board. In this way, an assembly process between the first connecting piece, the second connecting piece, and the circuit board is simpler.

In a possible implementation, the first rotating end of the first connecting piece includes a first stop portion, the first stop portion of the first connecting piece protrudes from the first end face of the first gear portion of the first connecting piece, and the first fastening base is provided with a first stop groove.

When the first key is in the unpressed state, at least a part of the first stop portion of the first connecting piece is located in the first stop groove and abuts against a bottom wall of the first stop groove.

When the first key is in the triggered state, the first stop portion is separated from a bottom wall of the first stop groove.

It may be understood that the bottom wall of the first stop groove may be configured to: when the first key is in the unpressed state, restrict the first connecting piece from continuing to rotate relative to the first fastening base.

In a possible implementation, the first stop portion of the first connecting piece is located on a side that is of the first rotating portion of the first connecting piece and that is away from the first movable end of the first connecting piece.

In a possible implementation, the circuit board includes a plurality of triggering ends.

The keyboard further includes a plurality of triggering pieces, the plurality of triggering pieces are located between the plurality of keys and the plurality of triggering ends in one-to-one correspondence, and when the key is in the triggered state, the key squeezes the triggering end of the circuit board through the triggering piece, and the circuit board generates an electrical signal.

It may be understood that, in comparison with a solution in which the key directly squeezes the triggering end of the circuit board, in this implementation, the key squeezes the triggering end of the circuit board through the triggering piece, thereby simplifying a structure of the key.

In a possible implementation, the plurality of triggering pieces are fastened on the plurality of triggering ends in one-to-one correspondence. In this way, it can be ensured that the triggering piece accurately triggers the triggering end of the circuit board, that is, a case in which the triggering piece cannot accurately squeeze the triggering end when the key squeezes the triggering piece can be avoided.

In a possible implementation, the triggering piece is an elastic piece, and when the key is in the triggered state, the triggering piece is in a compressed state.

It may be understood that, when the first key is switched from the triggered state to the unpressed state, because the first keycap is no longer subject to a pressing force, an elastic force applied by the triggering piece to the first keycap may enable the first keycap to move in the positive direction of the Z-axis. In this case, the first keycap may apply an acting force to the first connecting piece and the second connecting piece, so that the first rotating end of the first connecting piece may rotate relative to the first fastening base and the second fastening base, and the second rotating end of the second connecting piece may rotate relative to the first fastening base and the second fastening base. In this way, the first key may be switched from the triggered state to the unpressed state.

According to a second aspect, this application provides an electronic device. The electronic device includes a display apparatus and the keyboard according to the first aspect, and the keyboard is in communication connection to the display apparatus.

It may be understood that, because the keyboard can conform to ergonomics, have a relatively good comfortable feeling during long-term use, and improve keyboard space utilization, user experience of the electronic device is better.

### BRIEF DESCRIPTION OF DRAWINGS

To describe technical solutions in embodiments of this application or the background, the following describes accompanying drawings used in embodiments of this application or the background.
FIG. 1 is a diagram of a structure of an electronic device in an implementation according to an embodiment of this application;
FIG. 2 is a partial exploded view of the keyboard shown in FIG. 1 in an implementation;
FIG. 3 is a partial cross-sectional view of the keyboard shown in FIG. 1 in an implementation along a line A-A;
FIG. 4 is a diagram of a partial structure of the keyboard shown in FIG. 1 in an implementation;
FIG. 5 is a diagram of a partial structure of an implementation of the keyboard shown in FIG. 4 in a triggered state;
FIG. 6 is a partial exploded view of an implementation of the keyboard shown in FIG. 1 in a triggered state;
FIG. 7 is a partial exploded view of another implementation of the keyboard shown in FIG. 1 in a triggered state;
FIG. 8 is a diagram of a partial structure of the keyboard shown in FIG. 1 in another implementation;
FIG. 9 is a diagram of a partial structure of an implementation of the keyboard shown in FIG. 8 in a triggered state;
FIG. 10 is a partial exploded view of another implementation of the keyboard shown in FIG. 1 in a triggered state;
FIG. 11 is a partial exploded view of another implementation of the keyboard shown in FIG. 1 in a triggered state;
FIG. 12 is a partial exploded view of the keyboard shown in FIG. 1 in another implementation;
FIG. 13 is a partial cross-sectional view of the keyboard shown in FIG. 1 in another implementation along a line A-A;
FIG. 14A is a diagram of a partial structure of the keyboard shown in FIG. 1 in another implementation;
FIG. 14B is a diagram of a structure of an implementation of the first fastening base and the second fastening base shown in FIG. 14A at another angle;
FIG. 15 is a partial exploded view of the first key shown in FIG. 2 in an implementation;
FIG. 16 is a diagram of a structure of the first connecting piece and the second connecting piece shown in FIG. 15 at another angle;
FIG. 17 is a diagram 1 of a partial structure of the keyboard shown in FIG. 1 in an implementation;
FIG. 18 is a partial cross-sectional view of a part of the keyboard shown in FIG. 17 in an implementation along a line B-B;
FIG. 19 is a partial cross-sectional view of a part of the keyboard shown in FIG. 17 in an implementation along a line C-C;
FIG. 20 is a diagram of a structure of a part of the keyboard shown in FIG. 17 in a triggered state;
FIG. 21 is a cross-sectional view of a part of the keyboard shown in FIG. 20 in an implementation along a line D-D;
FIG. 22 is a diagram 2 of a partial structure of the keyboard shown in FIG. 1 in an implementation;
FIG. 23 is a diagram of a structure of the first keycap shown in FIG. 15 at another angle;
FIG. 24 is a diagram of a partial structure of the first key shown in FIG. 2 in an implementation;
FIG. 25 is a partial cross-sectional view of a part of the first key shown in FIG. 24 in an implementation along a line E-E;
FIG. 26 is a diagram of a structure of a part of the first key shown in FIG. 24 in a triggered state;
FIG. 27 is a cross-sectional view of a part of the first key shown in FIG. 26 in an implementation along a line F-F;
FIG. 28 is a partial cross-sectional view of a part of the keyboard shown in FIG. 1 in an implementation along a line G-G;
FIG. 29 is a partial cross-sectional view of an implementation of a part of the keyboard shown in FIG. 28 in a triggered state;
FIG. 30 is a partial exploded view of the keyboard shown in FIG. 1 in another implementation;
FIG. 31 is a partial cross-sectional view of another implementation of a part of the keyboard shown in FIG. 28 in a triggered state;
FIG. 32 is a diagram of a structure of the first connecting piece and the second connecting piece shown in FIG. 15 in another implementation;
FIG. 33 is a diagram of assembling the first connecting piece and the second connecting piece shown in FIG. 32;
FIG. 34 is a partial exploded view of the second key shown in FIG. 2 in an implementation;
FIG. 35 is a partial cross-sectional view of the keyboard shown in FIG. 1 in an implementation along a line H-H; and
FIG. 36 is a partial cross-sectional view of an implementation of the second key of the keyboard shown in FIG. 35 in a triggered state.

### DESCRIPTION OF EMBODIMENTS

The following clearly and completely describes the technical solutions in embodiments of this application with reference to the accompanying drawings in embodiments of this application.

In the descriptions of this application, it should be noted that, unless otherwise specified and limited, the terms "mount", "connect", "connecting", and "connection" should be understood in a broad sense. For example, the "connection" may be a detachable connection or a non-detachable connection, or may be a direct connection or an indirect connection through an intermediate medium, or may be an electrical connection or a mechanical connection. A "fastened connection" means a connection to each other with an unchanged relative position relationship. A "movable connection" means a connection to each other with a changeable relative position relationship. A "rotatable connection" means a connection to each other in a relatively rotatable manner. A "slidable connection" means a connection to each other in a relatively slidable manner. In addition, obtaining an integrated structure of two components through an integral forming process means that, in a process of forming one of the two components, the component is connected to the other component, and the two components do not need to be connected through reprocessing (for example, bonding, welding, clamping, or screwing). To make basic parameters of a gear have single certainty, a circle needs to be specified as a calculation reference during gear calculation. This circle is referred to as a pitch circle. A diameter of the pitch circle is equal to a modulus multiplied by a quantity of teeth. The modulus is equal to a ratio of a tooth pitch to π.

The orientation terms mentioned in embodiments of this application, for example, "top", "bottom", "inside", "outside", "left", "right", "far end", and "near end", are merely directions based on the accompanying drawings. Therefore, the orientation terms are used to better and more clearly describe and understand embodiments of this application, instead of indicating or implying that a specified apparatus or element should have a specific orientation or be constructed and operated in a specific orientation. Therefore, this cannot be understood as a limitation on embodiments of this application. A person of ordinary skill in the art may understand a specific meaning of the foregoing term according to a specific situation.

The terms "first", "second", and the like in the specification and claims of this application are used to distinguish between similar objects, but are not used to describe a specific sequence or order. It should be understood that data used in this way may be interchangeable in an appropriate case, so that embodiments of this application can be implemented in a sequence other than those shown or described herein, objects distinguished by "first", "second", and the like are generally of one type, and a quantity of objects is not limited. For example, there may be one or more first objects. In addition, in the specification and claims, "and/or" represents at least one of connected objects, and the character "/" generally represents an "or" relationship between associated objects.

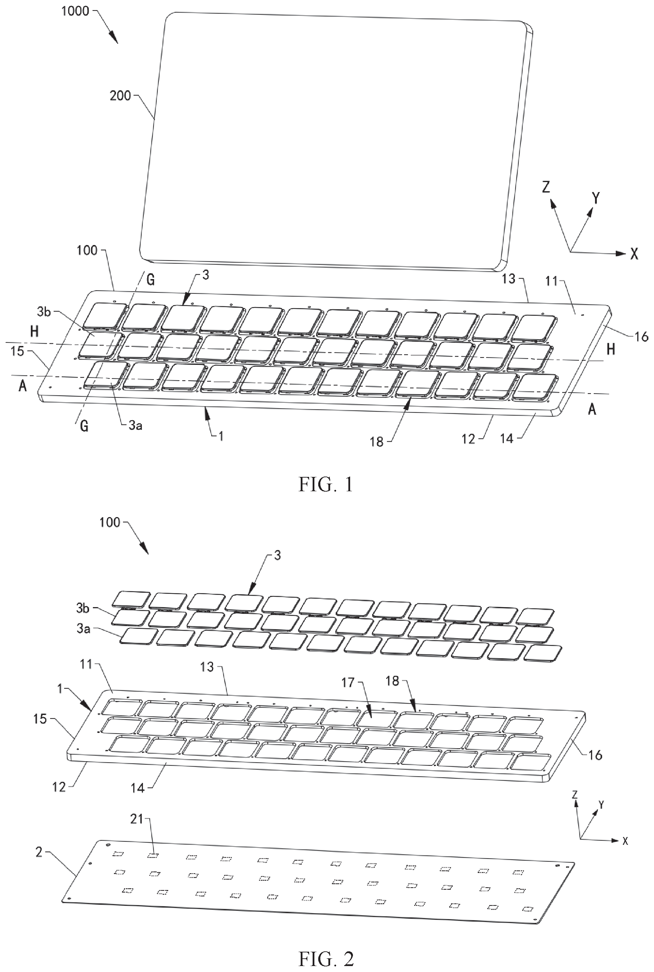

FIG. 1 is a diagram of a structure of an electronic device 1000 in an implementation according to an embodiment of this application.

As shown in FIG. 1, this application provides the electronic device 1000. The electronic device 1000 may be a device having a keyboard, such as a notebook computer or a personal computer.

For example, the electronic device 1000 includes a keyboard 100 and a display apparatus 200. The keyboard 100 may be used as an input apparatus of the display apparatus 200. The display apparatus 200 may be an apparatus having a display function, such as a display, a tablet computer (tablet personal computer), a laptop computer (laptop computer), a personal digital assistant (personal digital assistant, PDA), or a mobile phone.

It may be understood that the keyboard 100 may be in communication connection to the display apparatus 200. In this way, a user may input an instruction to the display apparatus 200 by using the keyboard 100, so that the display apparatus 200 performs display according to the input instruction. The communication connection includes a wired communication connection and a wireless communication connection. The "wired communication connection" may be understood as a form in which a plurality of elements are physically in contact and electrically conductive, or may be understood as a form in which a plurality of elements in a line structure are connected by using a physical line that can transmit a signal, such as a printed circuit board (printed circuit board, PCB) copper foil or a conducting wire. The "wireless communication connection" may be understood as that a plurality of elements implement signal transmission in a spaced/non-contact manner. For example, a plurality of elements may use a short-range communication technology (for example, Bluetooth (Bluetooth), a wireless local area network (Wi-Fi, Wireless Fidelity), or near field communication (NFC, Near Field Communication)).

For ease of description, for example, a thickness direction of the keyboard 100 is defined as a Z-axis direction, and a width direction of the keyboard 100 is defined as a Y-axis direction. A direction perpendicular to the Y-axis direction and the Z-axis direction is an X-axis direction, that is, a length direction of the keyboard 100 is an X-axis. It may be understood that a coordinate system of the keyboard 100 may be alternatively flexibly set according to a specific requirement.

FIG. 2 is a partial exploded view of the keyboard 100 shown in FIG. 1 in an implementation.

As shown in FIG. 1 and FIG. 2, the keyboard 100 includes a housing 1, a circuit board 2, and a plurality of keys 3. It may be understood that FIG. 1 and FIG. 2 merely provide a specific quantity of keys 3. However, a specific quantity, a specific size, and the like of the keys 3 are not specifically limited in this application.

In an implementation, the housing 1 includes a top plate 11 and a bottom plate 12 that are disposed oppositely, a far-end side plate 13 (also referred to as a first side plate 13) and a near-end side plate 14 (also referred to as a second side plate 14) that are disposed oppositely, and a left side plate 15 (also referred to as a third side plate 15) and a right side plate 16 (also referred to as a fourth side plate 16) that are disposed oppositely. The far-end side plate 13 and the near-end side plate 14 are connected between the top plate 11 and the bottom plate 12. The left side plate 15 and the right side plate 16 are connected between the top plate 11 and the bottom plate 12, and are further connected between the far-end side plate 13 and the near-end side plate 14. It may be understood that the far-end side plate 13 of the housing 1 may be a side plate that is of the housing 1 and that is away from the user in a process in which the user uses the keyboard 100. The near-end side plate 14 of the housing 1 may be a side plate that is of the housing 1 and that is close to the user in a process in which the user uses the keyboard 100. The left side plate 15 of the housing 1 may be a side plate that is of the housing 1 and that is close to the left hand of the user in a process in which the user uses the keyboard 100. The right side plate 16 of the housing 1 may be a side plate that is of the housing 1 and that is close to the right hand of the user in a process in which the user uses the keyboard 100.

The top plate 11, the bottom plate 12, the far-end side plate 13, the near-end side plate 14, the left side plate 15, and the right side plate 16 of the housing 1 may enclose accommodating space 17.

As shown in FIG. 1 and FIG. 2, a plurality of through holes 18 are provided on the top plate 11 of the housing 1. The through hole 18 is in communication with the accommodating space 17. It may be understood that a size, a shape, and an arrangement manner of the through hole 18 are not specifically limited in this application. In addition, sizes and shapes of the through holes 18 may be the same, or may be different.

It may be understood that although a specific structure of the housing 1 is described above, in another implementation, the housing 1 may alternatively use another structure. This is not specifically limited in this application.

As shown in FIG. 2, the circuit board 2 includes a plurality of triggering ends 21. FIG. 2 schematically shows the triggering end 21 by using a dashed-line box. The triggering end 21 is configured to enable the circuit board 2 to generate an electrical signal when being pressed by the key 3, and information or an instruction formed from the electrical signal may be transmitted to the display apparatus 200. It may be understood that a size, a shape, and an arrangement manner of the triggering end 21 are not specifically limited in this application. Specifically, the triggering end may be flexibly arranged according to a requirement. In addition, a manner of connecting the key 3 to the triggering end 21 is specifically described below with reference to related accompanying drawings, and details are not described herein.

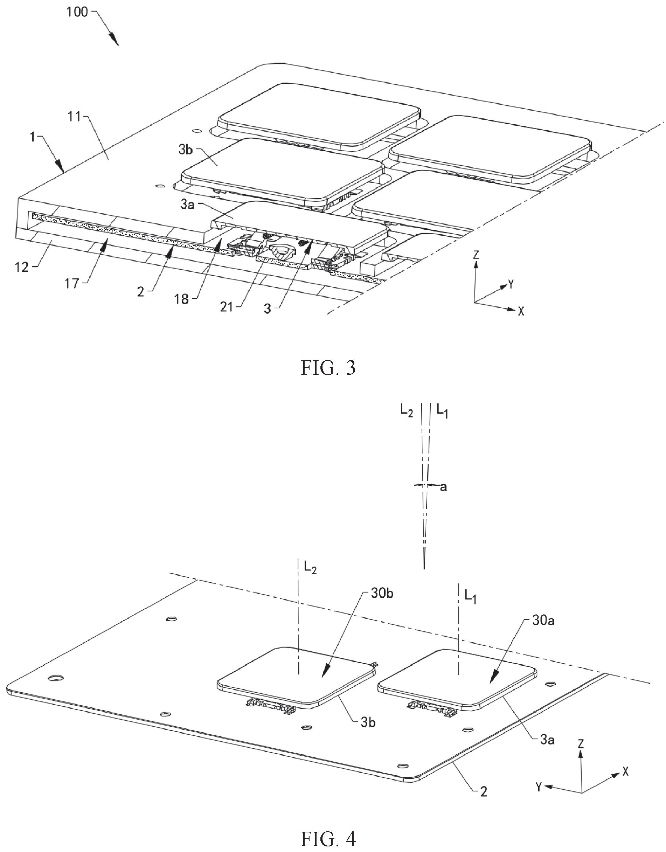

FIG. 3 is a partial cross-sectional view of the keyboard 100 shown in FIG. 1 in an implementation along a line A-A.

Refer to FIG. 3. With reference to FIG. 1 and FIG. 2, the circuit board 2 is located in the accommodating space 17 of the housing 1, and is mounted on the housing 1. For example, the circuit board 2 may be connected to the top plate 11 of the housing 1 in a fastened manner such as welding, screw locking, or bonding. In another implementation, the circuit board 2 may be alternatively fastened on the bottom plate 12 of the housing 1.

In an implementation, the plurality of triggering ends 21 of the circuit board 2 may be disposed in one-to-one correspondence with the plurality of through holes 18 of the housing 1.

Refer to FIG. 3. With reference to FIG. 1 and FIG. 2, for example, a plurality of keys 3 are mounted on the circuit board 2. A part of the key 3 may be located inside the through hole 18, and a part of the key 3 is located outside the housing 1. In another implementation, the key 3 may alternatively extend from the accommodating space 17 to the outside of the housing 1 through the through hole 18. In this case, a part of the key 3 may be located inside the accommodating space 17, a part of the key 3 is located inside the through hole 18, and a part of the key 3 is located outside the housing 1.

It may be understood that the plurality of keys 3 each include an unpressed state (also referred to as an initial state) and a triggered state (also referred to as a terminated state). FIG. 1 to FIG. 3 schematically show a structure in which the key 3 is in the unpressed state. When the key 3 is in the unpressed state, the key 3 does not trigger the triggering end 21 of the circuit board 2, and the circuit board 2 does not generate an electrical signal. When the key 3 is in the triggered state, the key 3 triggers the triggering end 21 of the circuit board 2, and the circuit board 2 may generate an electrical signal. It may be understood that the key 3 may directly press the triggering end 21 of the circuit board 2, or may press the triggering end 21 of the circuit board 2 through another component. This is not specifically limited in this application.

It may be understood that the key 3 may further include an intermediate state. The intermediate state of the key 3 may be any state between the unpressed state and the triggered state of the key 3.

As shown in FIG. 1 to FIG. 3, the plurality of keys 3 include a first key 3a and a second key 3b. It may be understood that FIG. 1 to FIG. 3 show that the first key 3a and the second key 3b are arranged in a positive direction of the Y-axis. In another implementation, the first key 3a and the second key 3b may be randomly arranged on an X-Y plane. For example, the first key 3a and the second key 3b may be arranged in a negative direction of the Y-axis, a positive direction of the X-axis, a negative direction of the X-axis, or the like. This is not specifically limited in this application.

FIG. 4 is a diagram of a partial structure of the keyboard 100 shown in FIG. 1 in an implementation.

As shown in FIG. 4, the first key 3a includes a top surface 30a. The top surface 30a of the first key 3a is a surface that is of the first key 3a and that faces away from the circuit board 2. The top surface 30a of the first key 3a may be a plane or a curved surface. The first key 3a includes a first central axis L₁. The first central axis L₁ of the first key 3a may be perpendicular to the top surface 30a of the first key 3a, and passes through a center of the top surface 30a of the first key 3a.

As shown in FIG. 4, the second key 3b includes a top surface 30b. The top surface 30b of the second key 3b is a surface that is of the second key 3b and that faces away from the circuit board 2. The top surface 30b of the second key 3b may be a plane or a curved surface. The second key 3b includes a second central axis L₂. The second central axis L₂ of the second key 3b may be perpendicular to the top surface 30b of the second key 3b, and passes through a center of the top surface 30b of the second key 3b.

As shown in FIG. 4, when both the first key 3a and the second key 3b are in the unpressed state, an included angle between the first central axis L₁ of the first key 3a and the second central axis L₂ of the second key 3b is a. a satisfies: 0°≤a<M₁, where 0°<M₁≤10°. For example, M₁ may be equal to 1°, 2°, 3°, 4°, 5°, 6°, 7°, 8°, 9°, 10°, or the like. For example, 0°≤a<3°. It may be understood that, to clearly show the included angle a, in FIG. 4, the first central axis L₁ and the second central axis L₂ are moved to the top of the first key 3a and the second key 3b, and are combined to form the included angle a. For similar settings below, refer to the explanation herein. Details are not described below again. In addition, the included angle a between the first central axis L₁ and the second central axis L₂ refers to a value, and does not include a direction. For related angles below, refer to the explanation herein. Details are not described below again.

It may be understood that, through design, when both the first key 3a and the second key 3b are in the unpressed state, a satisfies: 0°≤a<M₁, where 0°<M₁≤10°. Therefore, when both the first key 3a and the second key 3b are in the unpressed state, the first central axis L₁ of the first key 3a is approximately parallel to the second central axis L₂ of the second key 3b. In this case, when both the first key 3a and the second key 3b are in the unpressed state, the top surface 30a of the first key 3a is approximately parallel to the top surface 30b of the second key 3b, and orientations of the top surface 30a of the first key 3a and the top surface 30b of the second key 3b are approximately the same. In this way, in comparison with a solution in which orientations of the top surface 30a of the first key 3a and the top surface 30b of the second key 3b are different when both the first key 3a and the second key 3b are in the unpressed state, in this implementation, when both the first key 3a and the second key 3b are in the unpressed state, the orientations of the top surface 30a of the first key 3a and the top surface 30b of the second key 3b are approximately the same, so that the first key 3a and the second key 3b occupy relatively consistent space in a Z-axis direction. The first key 3a and the second key 3b do not easily cause wasted space in the Z-axis direction due to uneven top surfaces of the first key and the second key, thereby facilitating thinning of the keyboard 100.

In addition, when both the first key 3a and the second key 3b are in the unpressed state, the orientations of the top surface 30a of the first key 3a and the top surface 30b of the second key 3b are approximately the same, so that there is good appearance consistency between the first key 3a and the second key 3b, and an appearance of the keyboard 100 is neat, thereby helping improve user experience of the keyboard 100.

For example, when both the first key 3a and the second key 3b are in the unpressed state, the top surface 30a of the first key 3a is flush with the top surface 30b of the second key 3b. In this way, the first key 3a and the second key 3b occupy relatively consistent space in the Z-axis direction, thereby facilitating thinning of the keyboard 100.

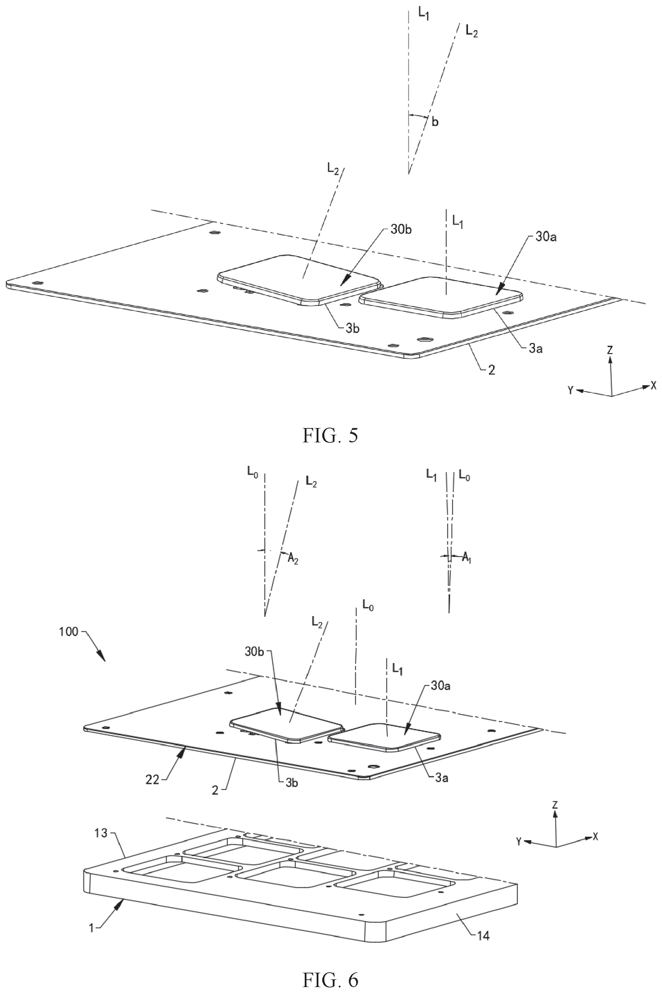

FIG. 5 is a diagram of a partial structure of an implementation of the keyboard 100 shown in FIG. 4 in a triggered state.

As shown in FIG. 5, when both the first key 3a and the second key 3b are in the triggered state, an included angle between the first central axis L₁ of the first key 3a and the second central axis L₂ of the second key 3b is b. b satisfies: b≥M₁. For example, b≥3°.

It may be understood that, through design, when both the first key 3a and the second key 3b are in the triggered state, b satisfies: b≥M₁, so that when both the first key 3a and the second key 3b are in the triggered state, the first central axis L₁ of the first key 3a intersects the second central axis L₂ of the second key 3b. In this case, when both the first key 3a and the second key 3b are in the triggered state, the top surface 30a of the first key 3a intersects (that is, is not parallel to) the top surface 30b of the second key 3b, that is, orientations of the top surface 30a of the first key 3a and the top surface 30b of the second key 3b are different. In this way, in comparison with a solution in which orientations of the top surface 30a of the first key 3a and the top surface 30b of the second key 3b are the same when both the first key 3a and the second key 3b are in the triggered state, in this implementation, because the orientations of the top surface 30a of the first key 3a and the top surface 30b of the second key 3b are different, the first key 3a and the second key 3b can not only satisfy user's comfortable feelings of tapping at different positions, but also resolve a problem that a wrist of the user is fatigued due to a same bending degree at different positions. In this case, a disposing manner of the first key 3a and the second key 3b can satisfy an ergonomic theory, and user experience is better.

It may be understood that, when both the first key 3a and the second key 3b are in the triggered state, the orientations of the top surface 30a of the first key 3a and the top surface 30b of the second key 3b have a plurality of setting manners. The following provides specific descriptions with reference to related accompanying drawings.

FIG. 6 is a partial exploded view of an implementation of the keyboard 100 shown in FIG. 1 in a triggered state.

As shown in FIG. 6, the second key 3b is located between the first key 3a and the far-end side plate 13 of the housing 1. In other words, compared with the first key 3a, the second key 3b is disposed close to the far-end side plate 13 of the housing 1.

In an implementation, when both the first key 3a and the second key 3b are in the triggered state, the top surface 30b of the second key 3b tilts in a direction close to the first key 3a, and an included angle A₂ between the second central axis L₂ of the second key 3b and a central axis L₀ of the circuit board 2 is greater than an included angle A₁ between the first central axis L₁ of the first key 3a and the central axis L₀ of the circuit board 2, that is, A₂>A₁. The central axis L₀ of the circuit board 2 is perpendicular to a top surface 22 of the circuit board 2, and passes through a center of the top surface 22 of the circuit board 2. The top surface 22 of the circuit board 2 is a surface that is of the circuit board 2 and that faces the keys 3.

It may be understood that, through design, when the first key 3a and the second key 3b are in the triggered state, the top surface 30b of the second key 3b tilts in the direction close to the first key 3a, and A₂>A₁, so that when the user taps a key 3 that is on the keyboard 100 and that is away from the user, the user is not prone to fatigue, thereby greatly improving user experience.

In an implementation, A₁ may satisfy: 0°≤A₁<3°. A₂ may satisfy: A₂≥3°. In this way, it can be ensured that A₂>A₁. In addition, because A₁ can satisfy: 0°≤A₁<3°, the first central axis L₁ of the first key 3a is approximately parallel to the central axis L₀ of the circuit board 2. In this case, the first key 3a does not occupy large space in the Z-axis direction, thereby helping improve space utilization of the keyboard 100.

In another implementation, A₁ may alternatively satisfy: A₁≥3°. Specifically, setting may be performed flexibly according to a requirement.

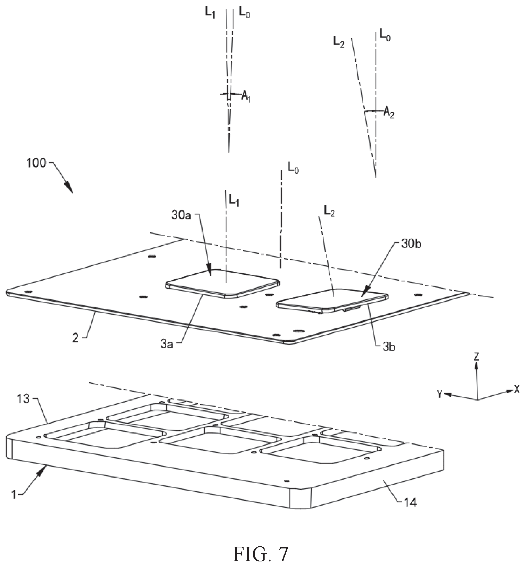

FIG. 7 is a partial exploded view of another implementation of the keyboard 100 shown in FIG. 1 in a triggered state.

As shown in FIG. 7, the second key 3b is located between the first key 3a and the near-end side plate 14 of the housing 1. In other words, compared with the first key 3a, the second key 3b is disposed close to the near-end side plate 14 of the housing 1.

In an implementation, when both the first key 3a and the second key 3b are in the triggered state, the top surface 30b of the second key 3b tilts in a direction close to the first key 3a, and an included angle A₂ between the second central axis L₂ of the second key 3b and a central axis L₀ of the circuit board 2 is greater than an included angle A₁ between the first central axis L₁ of the first key 3a and the central axis L₀ of the circuit board 2, that is, A₂>A₁.

It may be understood that, through design, when both the first key 3a and the second key 3b are in the triggered state, the top surface 30b of the second key 3b tilts in the direction close to the first key 3a, and A₂>A₁, so that when the user taps a key 3 that is on the keyboard 100 and that is close to the user, the wrist is not prone to fatigue, thereby greatly improving user experience.

In an implementation, A₁ may satisfy: 0°≤A₁<3°. A₂ may satisfy: A₂≥3°. In this way, it can be ensured that A₂>A₁. In addition, because A₁ can satisfy: 0°≤A₁<3°, the first central axis L₁ of the first key 3a is approximately parallel to the central axis L₀ of the circuit board 2. In this case, the first key 3a does not occupy large space in the Z-axis direction, thereby helping improve space utilization of the keyboard 100.

In another implementation, A₁ may alternatively satisfy: A₁≥3°. Specifically, setting may be performed flexibly according to a requirement.

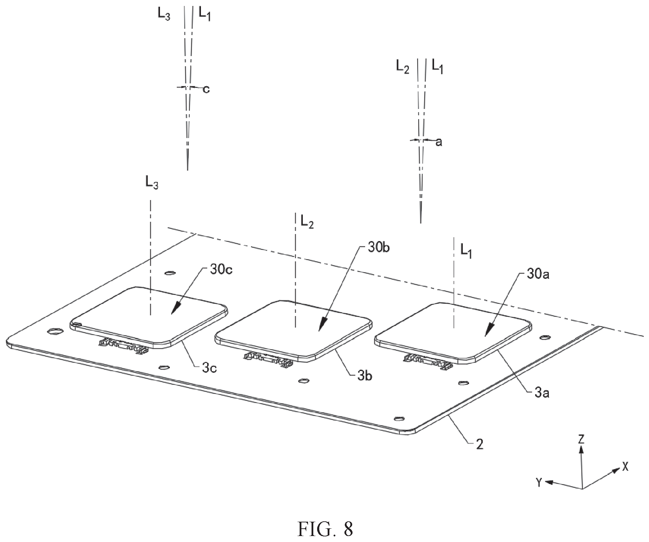

FIG. 8 is a diagram of a partial structure of the keyboard 100 shown in FIG. 1 in another implementation.

As shown in FIG. 8, for example, the plurality of keys 3 may further include a third key 3c. The third key 3c is spaced apart from both the first key 3a and the second key 3b.

As shown in FIG. 8, the third key 3c includes a top surface 30c. The top surface 30c of the third key 3c is a surface that is of the third key 3c and that faces away from the circuit board 2. The top surface 30c of the third key 3c may be a plane or a curved surface. The third key 3c includes a third central axis L₃. The third central axis L₃ of the third key 3c is perpendicular to the top surface 30c of the third key 3c, and passes through a center of the top surface 30c of the third key 3c.

As shown in FIG. 8, when both the first key 3a and the third key 3c are in the unpressed state, an included angle between the third central axis L₃ of the third key 3c and the first central axis L₁ of the first key 3a is c. c satisfies: 0°≤c<M₂, where 0°<M₂≤10°. For example, M₂ may be equal to 1°, 2°, 3°, 4°, 5°, 6°, 7°, 8°, 9°, 10°, or the like. For example, 0°≤c<3.

It may be understood that, through design, when both the first key 3a and the third key 3c are in the unpressed state, c satisfies: 0°≤c<M₂, where 0°<M₂≤10°. Therefore, when both the first key 3a and the third key 3c are in the unpressed state, the first central axis L₁ of the first key 3a is approximately parallel to the third central axis L₃ of the third key 3c. In this case, when both the first key 3a and the third key 3c are in the unpressed state, the top surface 30a of the first key 3a is approximately parallel to the top surface 30c of the third key 3c, that is, orientations of the top surface 30a of the first key 3a and the top surface 30c of the third key 3c are approximately the same. In addition, when both the first key 3a and the second key 3b are in the unpressed state, the orientations of the top surface 30a of the first key 3a and the top surface 30b of the second key 3b are approximately the same. In this way, when the first key 3a, the second key 3b, and the third key 3c are all in the unpressed state, the orientations of the top surface 30a of the first key 3a, the top surface 30b of the second key 3b, and the top surface 30c of the third key 3c are approximately the same. The first key 3a, the second key 3b, and the third key 3c occupy relatively consistent space in the Z-axis direction. The first key 3a, the second key 3b, and the third key 3c do not easily cause wasted space in the Z-axis direction due to uneven top surfaces of the first key, the second key, and the third key, thereby facilitating thinning of the keyboard 100.

In addition, when the first key 3a, the second key 3b, and the third key 3c are all in the unpressed state, the orientations of the top surface 30a of the first key 3a, the top surface 30b of the second key 3b, and the top surface 30c of the third key 3c are approximately the same, so that there is good appearance consistency between the first key 3a, the second key 3b, and the third key 3c, and an appearance of the keyboard 100 is neat and aesthetically pleasing, thereby helping improve user experience of the keyboard 100.

For example, when both the first key 3a and the third key 3c are in the unpressed state, the top surface 30a of the first key 3a is flush with the top surface 30c of the third key 3c. In this way, the first key 3a and the third key 3c occupy relatively consistent space in the Z-axis direction, thereby facilitating thinning of the keyboard 100.

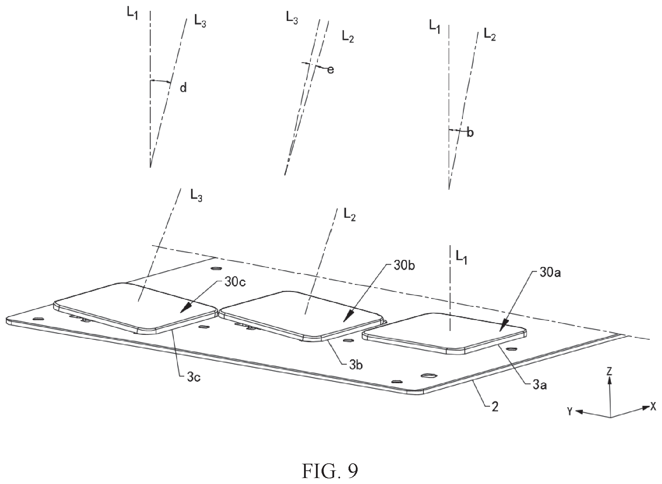

FIG. 9 is a diagram of a partial structure of an implementation of the keyboard 100 shown in FIG. 8 in a triggered state.

As shown in FIG. 9, when both the first key 3a and the third key 3c are in the triggered state, an included angle between the first central axis L₁ of the first key 3a and the third central axis L₃ of the third key 3c is d, and d satisfies: d≥M₂. For example, d≥3°.

It may be understood that, through design, when both the first key 3a and the third key 3c are in the triggered state, d satisfies: d≥M₂, so that when both the first key 3a and the third key 3c are in the triggered state, the first central axis L₁ of the first key 3a intersects the third central axis L₃ of the third key 3c. In this case, when both the first key 3a and the third key 3c are in the triggered state, the top surface 30a of the first key 3a intersects (that is, is not parallel to) the top surface 30c of the third key 3c, that is, orientations of the top surface 30a of the first key 3a and the top surface 30c of the third key 3c are different. The first key 3a and the third key 3c can not only satisfy user's comfortable feelings of tapping at different positions, but also resolve a problem that the wrist of the user is fatigued due to a same bending degree at different positions. A disposing manner of the first key 3a and the third key 3c can satisfy an ergonomic theory, and user experience is better.

It may be understood that, when the first key 3a, the second key 3b, and the third key 3c are all in the triggered state, an included angle d between the third central axis L₃ and the first central axis L₁ is greater than an included angle b between the second central axis L₂ and the first central axis L₁, that is, b and d satisfy: d>b.

It may be understood that, when both the second key 3b and the third key 3c are in the triggered state, an included angle between the second central axis L₂ of the second key 3b and the third central axis L₃ of the third key 3c is e, and e may satisfy: e≥3°, or may satisfy: 0°≤e<3°. This is not specifically limited in this application.

Several arrangement manners of the third key 3c, the first key 3a, and the second key 3b are described in detail below with reference to related accompanying drawings.

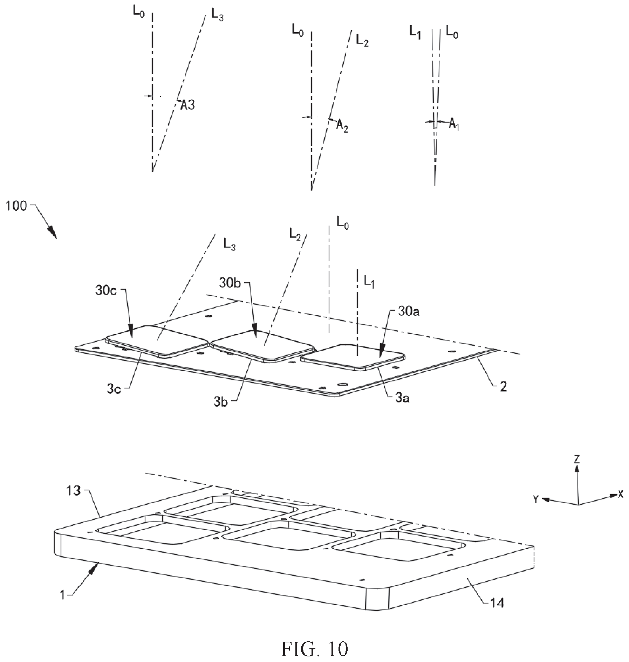

FIG. 10 is a partial exploded view of another implementation of the keyboard 100 shown in FIG. 1 in a triggered state.

As shown in FIG. 10, the third key 3c is located on a side that is of the second key 3b and that is away from the first key 3a, that is, the second key 3b is located between the first key 3a and the third key 3c. In addition, the third key 3c is located between the second key 3b and the far-end side plate 13 of the housing 1. In other words, compared with the first key 3a and the second key 3b, the third key 3c is disposed close to the far-end side plate 13 of the housing 1.

As shown in FIG. 10, when the first key 3a, the second key 3b, and the third key 3c are all in the triggered state, both the top surface 30b of the second key 3b and the top surface 30c of the third key 3c tilt in a direction close to the first key 3a, and an included angle A₂ between the second central axis L₂ of the second key 3b and the central axis L₀ of the circuit board 2 is greater than an included angle A₁ between the first central axis L₁ of the first key 3a and the central axis L₀ of the circuit board 2, that is, A₂>A₁. In addition, an included angle A₃ between the third central axis L₃ of the third key 3c and the central axis L₀ of the circuit board 2 is greater than the included angle A₂ between the second central axis L₂ of the second key 3b and the central axis L₀ of the circuit board 2, that is, A₃>A₂. In this way, when the user presses the third key 3c, the wrist of the user is not prone to fatigue, thereby greatly improving user experience. A disposing manner of the first key 3a, the second key 3b, and the third key 3c can satisfy an ergonomic theory, and user experience is better.

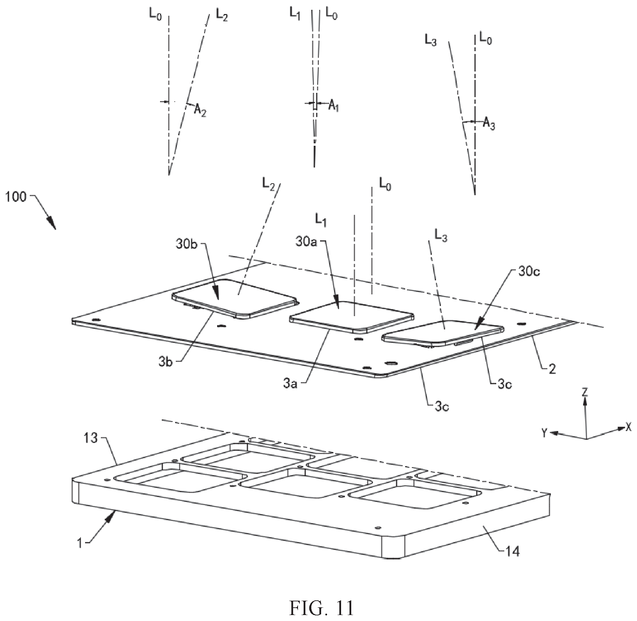

FIG. 11 is a partial exploded view of another implementation of the keyboard 100 shown in FIG. 1 in a triggered state.

As shown in FIG. 11, the first key 3a is located between the second key 3b and the third key 3c. The second key 3b is located between the first key 3a and the far-end side plate 13 of the housing 1. The third key 3c is located between the first key 3a and the near-end side plate 14 of the housing 1. In other words, compared with the first key 3a, the second key 3b is disposed close to the far-end side plate 13 of the housing 1. Compared with the first key 3a, the third key 3c is disposed close to the near-end side plate 14 of the housing 1.

In an implementation, when both the first key 3a and the second key 3b are in the triggered state, the top surface 30b of the second key 3b tilts in a direction close to the first key 3a, and an included angle A₂ between the second central axis L₂ of the second key 3b and a central axis L₀ of the circuit board 2 is greater than an included angle A₁ between the first central axis L₁ of the first key 3a and the central axis L₀ of the circuit board 2, that is, A₂>A₁.

It may be understood that, through design, when both the first key 3a and the second key 3b are in the triggered state, the top surface 30b of the second key 3b tilts in the direction close to the first key 3a, and A₂>A₁, so that when the user taps the second key 3b that is on the keyboard 100 and that is away from the user, the wrist of the user is not prone to fatigue, thereby greatly improving user experience.

In an implementation, when both the first key 3a and the third key 3c are in the triggered state, the top surface 30c of the third key 3c tilts in a direction close to the first key 3a, and an included angle A₃ between the third central axis L₃ of the third key 3c and the central axis L₀ of the circuit board 2 is greater than an included angle A₁ between the first central axis L₁ of the first key 3a and the central axis L₀ of the circuit board 2, that is, A₃>A₁.

It may be understood that, through design, when the first key 3a and the third key 3c are in the triggered state, the top surface 30c of the third key 3c tilts in the direction close to the first key 3a, and A₃>A₁, so that when the user taps the third key 3c that is on the keyboard 100 and that is close to the user, the wrist is not fatigued due to a large bending degree, thereby greatly improving user experience.

In this implementation, the included angle A₃ between the third central axis L₃ of the third key 3c and the central axis L₀ of the circuit board 2 may be greater than, less than, or equal to the included angle A₂ between the second central axis L₂ of the second key 3b and the central axis L₀ of the circuit board 2. This is not specifically limited in this application.

It may be understood that, when both the second key 3b and the third key 3c are in the triggered state, the top surface 30b of the second key 3b tilts in a direction close to the first key 3a, and the top surface 30c of the third key 3c tilts in a direction close to the first key 3a, so that the top surface 30b of the second key 3b and the top surface 30c of the third key 3c face different directions. In this way, cooperation between the second key 3b and the third key 3c can not only satisfy user's comfortable feelings of tapping at different positions, but also resolve a problem that the wrist of the user is fatigued due to a same bending degree at different positions. A disposing manner of the first key 3a and the third key 3c can satisfy an ergonomic theory, and user experience is better.

It may be understood that the plurality of keys 3 may further include a fourth key, a fifth key, ..., and an M^{th} key. M≥4. Compared with the first key 3a, the M^{th} key may be disposed closer to the far-end side plate 13, or may be disposed closer to the near-end side plate 14. For example, for the M^{th} key, refer to the disposing manner of the third key 3c. Specifically, keys may be flexibly disposed according to a requirement. In this way, more keys 3 of the keyboard 100 can be presented at different angles.

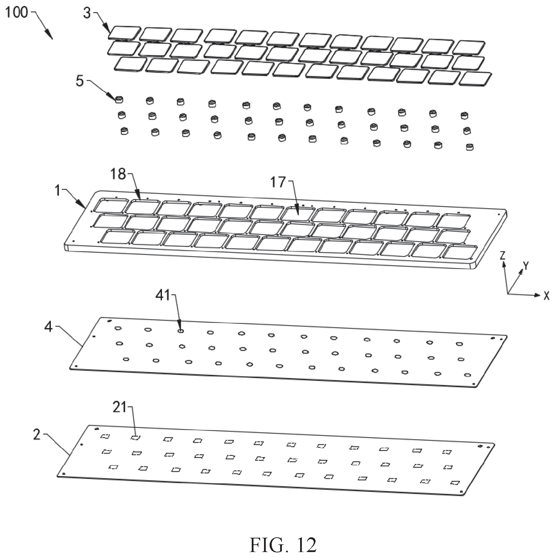

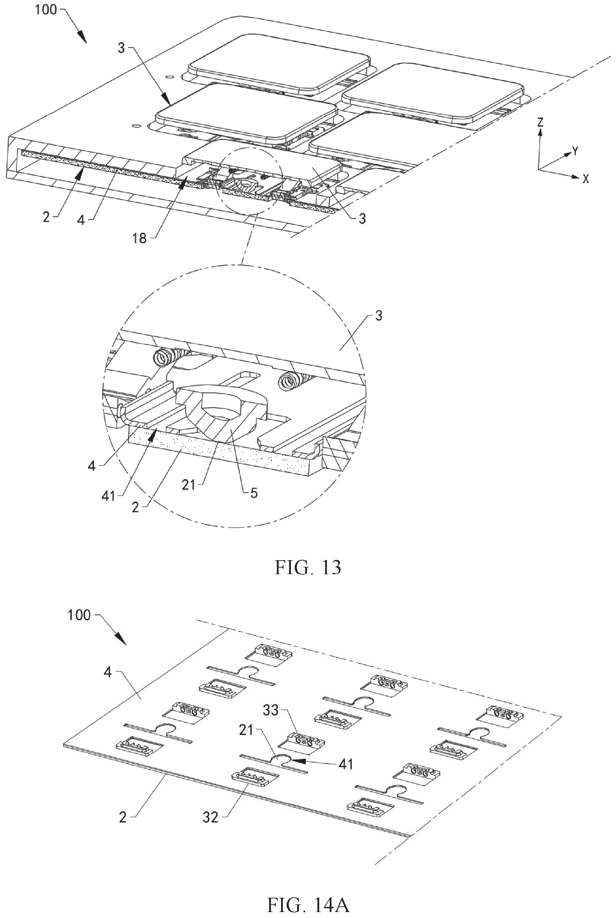

FIG. 12 is a partial exploded view of the keyboard 100 shown in FIG. 1 in another implementation. FIG. 13 is a partial cross-sectional view of the keyboard 100 shown in FIG. 1 in another implementation along a line A-A.

As shown in FIG. 12 and FIG. 13, the keyboard 100 further includes a plurality of triggering pieces 5. The triggering piece 5 may be an elastic piece, for example, a rubber cap, a spring leaf, or a spring. In another implementation, the triggering piece 5 may alternatively be a mechanical part in another form.

The plurality of triggering pieces 5 are located between the plurality of keys 3 and the plurality of triggering ends 21 in one-to-one correspondence. For example, one triggering piece 5 is located between one key 3 and one triggering end 21. It may be understood that, the key 3 may be pressed, the triggering piece 5 is squeezed by the key 3, the triggering piece 5 deforms, and the triggering end 21 of the circuit board 2 is squeezed, so that the circuit board 2 generates an electrical signal.

In an implementation, the plurality of triggering pieces 5 are fastened on the plurality of triggering ends 21 on the circuit board 2 in one-to-one correspondence. In this way, it can be ensured that the triggering piece 5 accurately triggers the triggering end 21 of the circuit board 2, that is, a case in which the triggering piece 5 cannot accurately squeeze the triggering end 21 when the key 3 squeezes the triggering piece 5 can be avoided. In another implementation, the plurality of triggering pieces 5 may be alternatively fastened on the keys 3, and the plurality of triggering pieces 5 are disposed opposite to the plurality of triggering ends 21 in one-to-one correspondence. When the key 3 is pressed, the key 3 may drive the triggering piece 5 to move, and the triggering piece 5 squeezes the triggering end 21 of the circuit board 2, so that the circuit board 2 generates an electrical signal.

As shown in FIG. 12 and FIG. 13, for example, the keyboard 100 further includes a reinforcement plate 4. The reinforcement plate 4 may be a steel sheet, an aluminum sheet, a titanium alloy sheet, or the like.

For example, the reinforcement plate 4 may be fastened on a surface that is of the circuit board 2 and that faces the key 3. The reinforcement plate 4 may be configured to improve strength of the circuit board 2. The reinforcement plate 4 is provided with a plurality of avoidance holes 41. The plurality of avoidance holes 41 are disposed in one-to-one correspondence with the plurality of triggering ends 21. The triggering piece 5 may be exposed relative to the reinforcement plate 4 through the avoidance hole 41. In another implementation, the plurality of triggering pieces 5 may be alternatively fastened on the reinforcement plate 4, and the plurality of triggering pieces 5 are disposed opposite to the plurality of triggering ends 21 through the avoidance holes 41 in one-to-one correspondence.

In another implementation, the reinforcement plate 4 may be alternatively fastened on a surface that is of the circuit board 2 and that faces away from the key 3. In this case, the reinforcement plate 4 does not interfere with the triggering piece 5. The avoidance hole 41 may not be provided on the reinforcement plate 4.

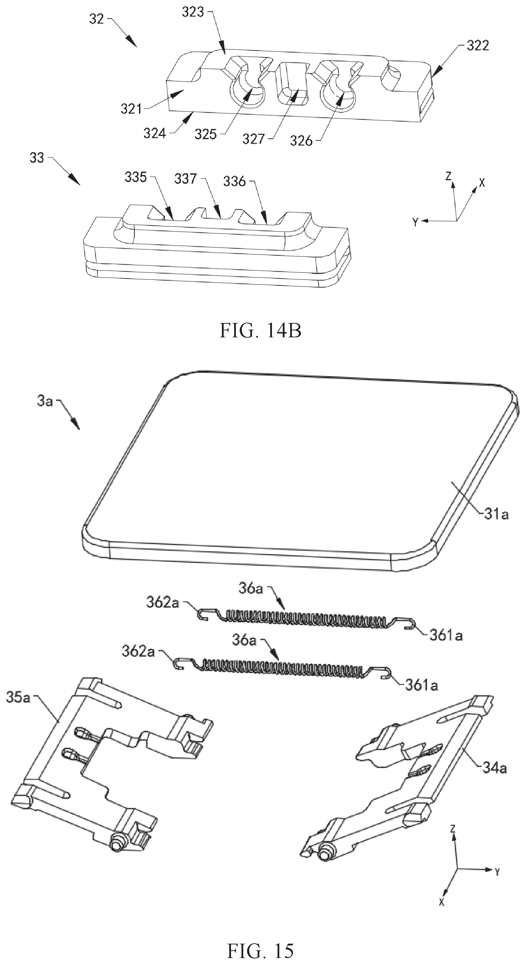

FIG. 14A is a diagram of a partial structure of the keyboard 100 shown in FIG. 1 in another implementation. FIG. 14B is a diagram of a structure of an implementation of the first fastening base 32 and the second fastening base 33 shown in FIG. 14A at another angle.

As shown in FIG. 14A and FIG. 14B, the keyboard 100 further includes a plurality of first fastening bases 32 and a plurality of second fastening bases 33.

For example, the first fastening base 32 includes a first side surface 321 and a second side surface 322 that are disposed away from each other, and a first top surface 323 and a first bottom surface 324 that are disposed away from each other. The first side surface 321 and the second side surface 322 of the first fastening base 32 are connected between the first top surface 323 and the first bottom surface 324 of the first fastening base 32.

As shown in FIG. 14A and FIG. 14B, the first fastening base 32 may be provided with a first rotating shaft groove 325 and a second rotating shaft groove 326 that are spaced apart from each other. For example, the first rotating shaft groove 325 and the second rotating shaft groove 326 may penetrate the first top surface 323 and the first side surface 321 of the first fastening base 32. In another implementation, the first rotating shaft groove 325 and the second rotating shaft groove 326 may also penetrate the second side surface 322 of the first fastening base 32.

As shown in FIG. 14A and FIG. 14B, the first fastening base 32 is provided with a first stop groove 327. The first stop groove 327 may be located between the first rotating shaft groove 325 and the second rotating shaft groove 326. For example, the first stop groove 327 may penetrate the first top surface 323 and the first side surface 321 of the first fastening base 32.

It may be understood that, the second fastening base 33 and the first fastening base 32 in this implementation may have a same structure or similar structures, symmetric or partially symmetric structures, or different structures. In this implementation, the second fastening base 33 and the first fastening base 32 are of a same structure. For a basic design of a component structure of the second fastening base 33, a design of a connection relationship between components, and a design of another connection relationship other than components and parts, refer to the related solution of the first fastening base 32. For example, the second fastening base 33 is provided with a third rotating shaft groove 335, a fourth rotating shaft groove 336, and a second stop groove 337. The second stop groove 337 is located between the third rotating shaft groove 335 and the fourth rotating shaft groove 336. In addition, the second fastening base 33 and the first fastening base 32 are allowed to be slightly different in detail structures or position arrangements of components. Details are not described herein.

As shown in FIG. 14A and FIG. 14B, the plurality of first fastening bases 32 and the plurality of second fastening bases 33 are disposed on two sides of the plurality of triggering ends 21 in one-to-one correspondence. In other words, one first fastening base 32 and one second fastening base 33 are disposed on two sides of one triggering end 21.

For example, the first fastening base 32 and the second fastening base 33 are fastened on the reinforcement plate 4. The plurality of first fastening bases 32 and the plurality of second fastening bases 33 are disposed on two sides of the plurality of avoidance holes 41 in one-to-one correspondence. In this case, the first fastening base 32 and the second fastening base 33 may be fastened on the circuit board 2 through the reinforcement plate 4.

For example, the first fastening base 32 and the second fastening base 33 may be fastened on the reinforcement plate 4 through clamping, welding, bonding, or the like. In another implementation, the first fastening base 32 and the second fastening base 33 may alternatively form an integral structure with the reinforcement plate 4.

In another implementation, the first fastening base 32 and the second fastening base 33 may alternatively be directly fastened on the circuit board 2, or form an integral structure with the circuit board 2. This is not specifically limited in this application.

With reference to related accompanying drawings, the foregoing specifically describes forms of the key 3 in the unpressed state and the triggered state, and an arrangement manner of the plurality of keys 3. The following describes a structure of the key 3 in detail with reference to related accompanying drawings.

FIG. 15 is a partial exploded view of the first key 3a shown in FIG. 2 in an implementation.

As shown in FIG. 15, the first key 3a includes a first keycap 31a, a first connecting piece 34a, a second connecting piece 35a, and a first elastic piece 36a. The first elastic piece 36a may be a spring, a spring leaf, or another elastic mechanical part. There may be two first elastic pieces 36a. It may be understood that a quantity, a size, and a shape of the first elastic piece 36a are not specifically limited in this application.

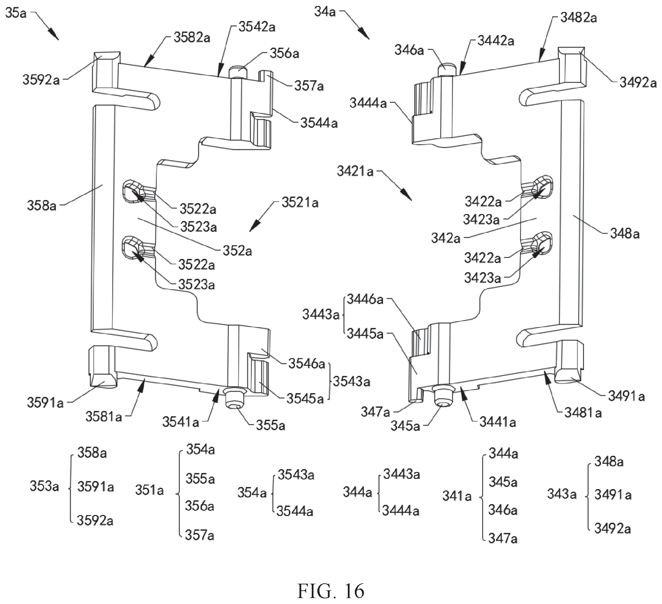

FIG. 16 is a diagram of a structure of the first connecting piece 34a and the second connecting piece 35a shown in FIG. 15 at another angle.

As shown in FIG. 16, the first connecting piece 34a includes a first rotating end 341a, a first connecting section 342a, and a first movable end 343a that are sequentially connected.

For example, the first rotating end 341a of the first connecting piece 34a includes a first gear portion 344a, a first rotating portion 345a, a second rotating portion 346a, and a first stop portion 347a.

For example, the first gear portion 344a of the first connecting piece 34a includes a first end face 3441a and a second end face 3442a that are disposed away from each other.

For example, the first rotating portion 345a and the second rotating portion 346a of the first connecting piece 34a may be of a block structure. The first rotating portion 345a of the first connecting piece 34a protrudes from the first end face 3441a of the first gear portion 344a. The second rotating portion 346a of the first connecting piece 34a protrudes from the second end face 3442a of the first gear portion 344a.

For example, the first stop portion 347a of the first connecting piece 34a may be of a block structure. The first stop portion 347a of the first connecting piece 34a protrudes from the first end face 3441a of the first gear portion 344a, and is spaced apart from the first rotating portion 345a of the first connecting piece 34a. In an implementation, the first stop portion 347a of the first connecting piece 34a is located on a side that is of the first rotating portion 345a of the first connecting piece 34a and that is away from the first movable end 343a of the first connecting piece 34a.

As shown in FIG. 16, for example, a first avoidance hole 3421a is provided on the first connecting piece 34a. The first avoidance hole 3421a may extend from the first rotating end 341a of the first connecting piece 34a to the first connecting section 342a of the first connecting piece 34a. In another implementation, the first avoidance hole 3421a may be alternatively provided only at the first rotating end 341a of the first connecting piece 34a.

For example, the first avoidance hole 3421a divides the first gear portion 344a of the first rotating end 341a of the first connecting piece 34a into a first gear sub-portion 3443a and a second gear sub-portion 3444a that are spaced apart from each other. The first rotating portion 345a protrudes from a surface that is of the first gear sub-portion 3443a and that is away from the second gear sub-portion 3444a. The second rotating portion 346a protrudes from a surface that is of the second gear sub-portion 3444a and that is away from the first gear sub-portion 3443a.

For example, the first gear sub-portion 3443a of the first connecting piece 34a includes a first tooth 3445a and a second tooth 3446a. The second tooth 3446a is located on a side that is of the first tooth 3445a and that is close to the second gear sub-portion 3444a. A height difference exists between the second tooth 3446a and the first tooth 3445a.

For example, for a structure of the second gear sub-portion 3444a of the first connecting piece 34a, refer to the structure of the first gear sub-portion 3443a of the first connecting piece 34a. Details are not described herein.

As shown in FIG. 16, the first connecting section 342a of the first connecting piece 34a includes a first connecting shaft 3422a. There may be two first connecting shafts 3422a. A quantity of first connecting shafts 3422a may be the same as a quantity of first elastic pieces 36a. In another implementation, a quantity, a size, and a shape of the first connecting shaft 3422a are not specifically limited in this application.

For example, the first connecting section 342a of the first connecting piece 34a is provided with a first mounting hole 3423a. The first mounting hole 3423a and the first avoidance hole 3421a are spaced apart from each other. A part between the first mounting hole 3423a and the first avoidance hole 3421a may be used to form the first connecting shaft 3422a.

As shown in FIG. 16, the first movable end 343a of the first connecting piece 34a includes a first body portion 348a, a first movable portion 3491a, and a second movable portion 3492a.

For example, the first body portion 348a of the first movable end 343a may be plate-shaped. The first body portion 348a includes a first side surface 3481a and a second side surface 3482a that are disposed away from each other.

For example, the first movable portion 3491a and the second movable portion 3492a may be of a block structure. The first movable portion 3491a protrudes from the first side surface 3481a of the first body portion 348a. The second movable portion 3492a protrudes from the second side surface 3482a of the first body portion 348a.

As shown in FIG. 16, the second connecting piece 35a includes a second rotating end 351a, a second connecting section 352a, and a second movable end 353a that are sequentially connected.

For example, the second rotating end 351a of the second connecting piece 35a includes a second gear portion 354a, a third rotating portion 355a, a fourth rotating portion 356a, and a second stop portion 357a. In an implementation, a diameter of a pitch circle of the second gear portion 354a of the second connecting piece 35a is the same as a diameter of a pitch circle of the first gear portion 344a of the first connecting piece 34a.

For example, the second gear portion 354a of the second connecting piece 35a includes a first end face 3541a and a second end face 3542a that are disposed away from each other.

For example, the third rotating portion 355a and the fourth rotating portion 356a of the second connecting piece 35a may be of a block structure. The third rotating portion 355a of the second connecting piece 35a protrudes from the first end face 3541a of the second gear portion 354a. The fourth rotating portion 356a of the second connecting piece 35a protrudes from the second end face 3542a of the second gear portion 354a. In another implementation, the third rotating portion 355a and the fourth rotating portion 356a of the second connecting piece 35a may alternatively be of a through hole structure.

For example, the second stop portion 357a of the second connecting piece 35a may be of a block structure. The second stop portion 357a of the second connecting piece 35a protrudes from the second end face 3542a of the second gear portion 354a, and is spaced apart from the fourth rotating portion 356a of the second connecting piece 35a. In an implementation, the second stop portion 357a of the second connecting piece 35a is located on a side that is of the fourth rotating portion 356a of the second connecting piece 35a and that is away from the second movable end 353a of the second connecting piece 35a.

As shown in FIG. 16, for example, a second avoidance hole 3521a is provided on the second connecting piece 35a. The second avoidance hole 3521a may extend from the second rotating end 351a of the second connecting piece 35a to the second connecting section 352a of the second connecting piece 35a. In another implementation, the second avoidance hole 3521a may be alternatively disposed only at the second rotating end 351a of the second connecting piece 35a.

For example, the second avoidance hole 3521a divides the second gear portion 354a of the second rotating end 351a of the second connecting piece 35a into a first gear sub-portion 3543a and a second gear sub-portion 3544a that are spaced apart from each other. The third rotating portion 355a protrudes from a surface that is of the first gear sub-portion 3543a and that is away from the second gear sub-portion 3544a. The fourth rotating portion 356a protrudes from a surface that is of the second gear sub-portion 3544a and that is away from the first gear sub-portion 3543a.

For example, the first gear sub-portion 3543a of the second connecting piece 35a includes a first tooth 3545a and a second tooth 3546a. The second tooth 3546a is located on a side that is of the first tooth 3545a and that is close to the second gear sub-portion 3544a. A height difference exists between the second tooth 3546a and the first tooth 3545a. In other words, the first tooth 3545a and the second tooth 3546a of the second connecting piece 35a are disposed in a staggered manner in a thickness direction of the second connecting piece 35a.

For example, for a structure of the second gear sub-portion 3544a of the second connecting piece 35a, refer to the structure of the first gear sub-portion 3543a of the second connecting piece 35a. Details are not described herein.

As shown in FIG. 16, the second connecting section 352a of the second connecting piece 35a includes a second connecting shaft 3522a. There may be two second connecting shafts 3522a. A quantity of second connecting shafts 3522a may be the same as a quantity of first elastic pieces 36a. In another implementation, a quantity, a size, and a shape of the second connecting shaft 3522a are not specifically limited in this application.

For example, the second connecting section 352a of the second connecting piece 35a is provided with a second mounting hole 3523a. The second mounting hole 3523a and the second avoidance hole 3521a are spaced apart from each other. A part between the second mounting hole 3523a and the second avoidance hole 3521a may be used to form the second connecting shaft 3522a.

As shown in FIG. 16, the second movable end 353a of the second connecting piece 35a includes a second body portion 358a, a third movable portion 3591a, and a fourth movable portion 3592a.

For example, the second body portion 358a of the third movable end 353a may be plate-shaped. The second body portion 358a includes a first side surface 3581a and a second side surface 3582a that are disposed away from each other.

For example, the third movable portion 3591a and the fourth movable portion 3592a may be of a block structure. The third movable portion 3591a protrudes from the first side surface 3581a of the second body portion 358a. The fourth movable portion 3592a protrudes from the second side surface 3582a of the second body portion 358a.

It may be understood that the second connecting piece 35a and the first connecting piece 34a in this implementation may have a same structure or similar structures, symmetric or partially symmetric structures, or different structures. In this implementation, the second connecting piece 35a and the first connecting piece 34a are of a same structure. For a basic design of a component structure of the second connecting piece 35a, a design of a connection relationship between components, and a design of another connection relationship other than components and parts, refer to the related solution of the first connecting piece 34a. In addition, the second connecting piece 35a and the first connecting piece 34a are allowed to be slightly different in detail structures or position arrangements of components. Details are not described herein.

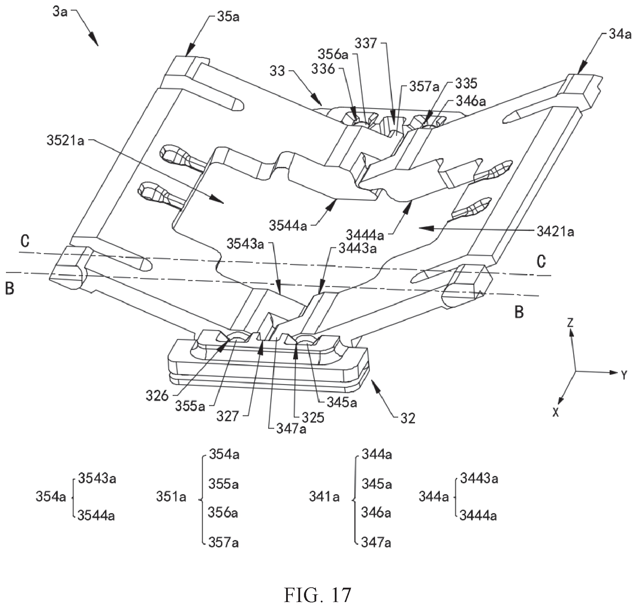

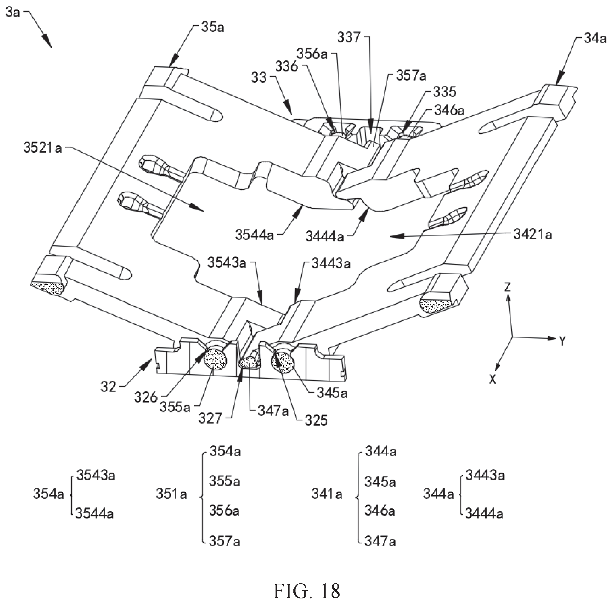

FIG. 17 is a diagram 1 of a partial structure of the keyboard 100 shown in FIG. 1 in an implementation. FIG. 18 is a partial cross-sectional view of a part of the keyboard 100 shown in FIG. 17 in an implementation along a line B-B.

As shown in FIG. 17 and FIG. 18, the first connecting piece 34a may be movably connected to the first fastening base 32 and the second fastening base 33. For example, the first rotating end 341a of the first connecting piece 34a may be rotatably connected to the first fastening base 32 and the second fastening base 33. With reference to FIG. 14A, because the first fastening base 32 and the second fastening base 33 are fastened on the circuit board 2, the first connecting piece 34a may be rotatably connected to the circuit board 2 through the first fastening base 32 and the second fastening base 33 (referring to FIG. 14A). In another implementation, when the first key 3a does not include the first fastening base 32 and the second fastening base 33, or the first fastening base 32 and the second fastening base 33 are integrally formed with the circuit board 2, the first connecting piece 34a is directly rotatably connected to the circuit board 2 (referring to FIG. 14A).

For example, the first rotating portion 345a of the first rotating end 341a of the first connecting piece 34a may be located in the first rotating shaft groove 325 of the first fastening base 32. The first rotating portion 345a of the first rotating end 341a of the first connecting piece 34a may rotate in the first rotating shaft groove 325 of the first fastening base 32. In another implementation, a structure form of the first rotating portion 345a of the first connecting piece 34a may be exchanged with a structure form of the first rotating shaft groove 325 of the first fastening base 32, that is, the first rotating portion 345a of the first connecting piece 34a may use a rotating shaft groove structure or a rotating shaft hole structure. The first fastening base 32 may be provided with a rotating shaft bump structure.

For example, the second rotating portion 346a of the first rotating end 341a of the first connecting piece 34a may be located in the third rotating shaft groove 335 of the second fastening base 33. The second rotating portion 346a of the first rotating end 341a of the first connecting piece 34a may rotate in the third rotating shaft groove 335 of the second fastening base 33. In another implementation, a structure form of the second rotating portion 346a of the first connecting piece 34a may be exchanged with a structure form of the third rotating shaft groove 335 of the second fastening base 33, that is, the second rotating portion 346a of the first connecting piece 34a may use a rotating shaft groove structure or a rotating shaft hole structure. The second fastening base 33 may be provided with a rotating shaft bump structure.

As shown in FIG. 17 and FIG. 18, the second connecting piece 35a may be movably connected to the first fastening base 32 and the second fastening base 33. For example, the second rotating end 351a of the second connecting piece 35a may be rotatably connected to the first fastening base 32 and the second fastening base 33. It may be understood that the second connecting piece 35a may be rotatably connected to the circuit board 2 through the first fastening base 32 and the second fastening base 33 (referring to FIG. 14A). In another implementation, when the first key 3a does not include the first fastening base 32 and the second fastening base 33, the second connecting piece 35a may be directly connected to the circuit board 2 (referring to FIG. 14A).

For example, the third rotating portion 355a of the second rotating end 351a of the second connecting piece 35a may be located in the second rotating shaft groove 326 of the first fastening base 32. The third rotating portion 355a of the second rotating end 351a of the second connecting piece 35a may rotate in the second rotating shaft groove 326 of the first fastening base 32.

For example, the fourth rotating portion 356a of the second rotating end 351a of the second connecting piece 35a may be located in the fourth rotating shaft groove 336 of the second fastening base 33. The fourth rotating portion 356a of the second rotating end 351a of the second connecting piece 35a may rotate in the fourth rotating shaft groove 336 of the second fastening base 33.

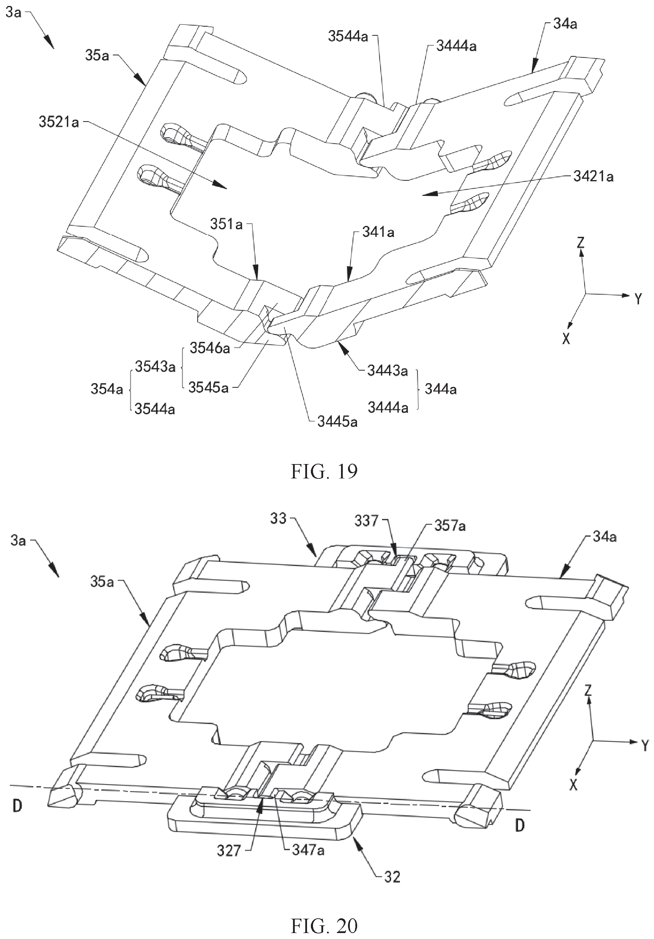

FIG. 19 is a partial cross-sectional view of a part of the keyboard 100 shown in FIG. 17 in an implementation along a line C-C.

Refer to FIG. 19. With reference to FIG. 17 and FIG. 18, the first gear portion 344a of the first rotating end 341a of the first connecting piece 34a may be engaged with the second gear portion 354a of the second rotating end 351a of the second connecting piece 35a.

In an implementation, the first gear sub-portion 3443a of the first connecting piece 34a may be engaged with the first gear sub-portion 3543a of the second connecting piece 35a. For example, the first tooth 3445a of the first gear sub-portion 3443a of the first connecting piece 34a is engaged with the first tooth 3545a of the first gear sub-portion 3543a of the second connecting piece 35a. The second tooth 3446a (referring to FIG. 16) of the first gear sub-portion 3443a of the first connecting piece 34a is engaged with the second tooth 3546a of the first gear sub-portion 3543a of the second connecting piece 35a. In addition, a connection line between the first tooth 3445a and the second tooth 3446a (referring to FIG. 16) of the first connecting piece 34a intersects a connection line between the first tooth 3545a and the second tooth 3546a of the first gear sub-portion 3543a of the second connecting piece 35a. In other words, the first tooth 3445a and the second tooth 3446a (referring to FIG. 16) of the first gear sub-portion 3443a of the first connecting piece 34a may be engaged in a staggered manner with the first tooth 3545a and the second tooth 3546a of the first gear sub-portion 3543a of the second connecting piece 35a. In this way, the first gear sub-portion 3443a of the first connecting piece 34a and the first gear sub-portion 3543a of the second connecting piece 35a may be mutually limited in the X-axis direction, to prevent the first gear sub-portion 3443a of the first connecting piece 34a from being detached from the first gear sub-portion 3543a of the second connecting piece 35a in the X-axis direction.

Refer to FIG. 19. With reference to FIG. 17 and FIG. 18, the second gear sub-portion 3444a of the first connecting piece 34a is also engaged with the second gear sub-portion 3544a of the second connecting piece 35a. It may be understood that, for an engagement manner of the second gear sub-portion 3444a of the first connecting piece 34a and the second gear sub-portion 3544a of the second connecting piece 35a, refer to the engagement manner of the first gear sub-portion 3443a of the first connecting piece 34a and the first gear sub-portion 3543a of the second connecting piece 35a. Details are not described herein.

It may be understood that, the first gear portion 344a of the first rotating end 341a of the first connecting piece 34a is engaged with the second gear portion 354a of the second rotating end 351a of the second connecting piece 35a, so that rotation actions of the first connecting piece 34a and the second connecting piece 35a can be synchronized, that is, the first connecting piece 34a and the second connecting piece 35a synchronously move close to each other or away from each other. In addition, because the diameter of the pitch circle of the second gear portion 354a of the second connecting piece 35a is the same as the diameter of the pitch circle of the first gear portion 344a of the first connecting piece 34a, that is, the ratio of the diameter of the pitch circle of the second gear portion 354a of the second connecting piece 35a to the diameter of the pitch circle of the first gear portion 344a of the first connecting piece 34a is 1, a rotation angle of the first connecting piece 34a may be the same as a rotation angle of the second connecting piece 35a.

It may be understood that, although a structure of the first gear portion 344a of the first rotating end 341a of the first connecting piece 34a and the second gear portion 354a of the second rotating end 351a of the second connecting piece 35a is described in this implementation, in another implementation, the first gear portion 344a of the first rotating end 341a of the first connecting piece 34a and the second gear portion 354a of the second rotating end 351a of the second connecting piece 35a may alternatively use another structure. For example, shapes, sizes, and the like of the first gear portion 344a of the first rotating end 341a of the first connecting piece 34a and the second gear portion 354a of the second rotating end 351a of the second connecting piece 35a may be designed according to a specific model such as a product form and size.

As shown in FIG. 17 to FIG. 19, when the first key 3a is in the unpressed state, an included angle between the first connecting piece 34a and the second connecting piece 35a is a first angle. The first angle may be in a range of 120° to 160°. For example, the first angle may be 120°, 125°, 145°, 150°, 160°, or the like. In this case, the first connecting piece 34a and the second connecting piece 35a are approximately in a "scissors" shape.

In addition, when the first key 3a is in the unpressed state, the first avoidance hole 3421a of the first connecting piece 34a is in communication with the second avoidance hole 3521a of the second connecting piece 35a. Space surrounded by the first avoidance hole 3421a and the second avoidance hole 3521a may be used to provide avoidance space for another component of the first key 3a or another component of the keyboard 100, to avoid mutual interference between the another component of the first key 3a or the another component of the keyboard 100 and the first connecting piece 34a or the second connecting piece 35a.

With reference to FIG. 14B, as shown in FIG. 17 and FIG. 18, when the first key 3a is in the unpressed state, at least a part of the first stop portion 347a of the first rotating end 341a of the first connecting piece 34a may be located in the first stop groove 327 of the first fastening base 32, and abuts against a bottom wall of the first stop groove 327. The bottom wall of the first stop groove 327 may be configured to: when the first key 3a is in the unpressed state, restrict the first connecting piece 34a from continuing to rotate relative to the first fastening base 32. In addition, at least a part of the second stop portion 357a of the second rotating end 351a of the second connecting piece 35a may be located in the second stop groove 337 of the second fastening base 33, and abuts against a bottom wall of the second stop groove 337. The bottom wall of the second stop groove 337 may be configured to: when the first key 3a is in the unpressed state, restrict the second connecting piece 35a from continuing to rotate relative to the second fastening base 33.

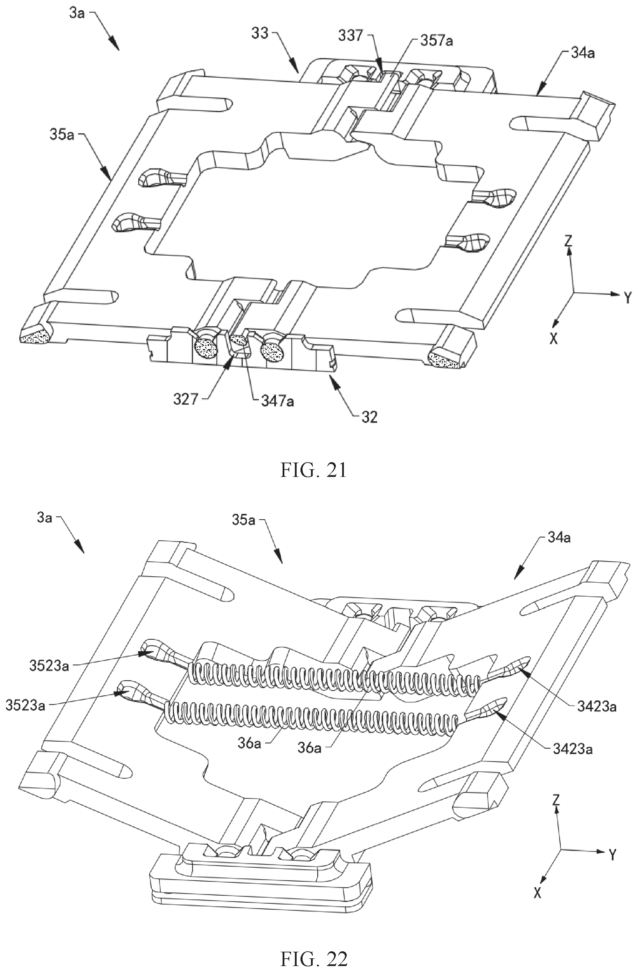

FIG. 20 is a diagram of a structure of a part of the keyboard 100 shown in FIG. 17 in a triggered state. FIG. 21 is a cross-sectional view of a part of the keyboard 100 shown in FIG. 20 in an implementation along a line D-D.

As shown in FIG. 20 and FIG. 21, when the first key 3a is in the triggered state, an included angle between the first connecting piece 34a and the second connecting piece 35a is a second angle. The second angle is greater than the first angle. For example, the second angle may be in a range of 160° to 180°. For example, the second angle may be 160°, 170°, 180°, or the like. In this case, when the second angle is 180°, the first connecting piece 34a and the second connecting piece 35a may be in a shape of "straight line".

In addition, when the first key 3a is in the triggered state, the first stop portion 347a may be disposed separately from the bottom wall of the first stop groove 327, and the second stop portion 357a may be disposed separately from the bottom wall of the second stop groove 337.

FIG. 22 is a diagram 2 of a partial structure of the keyboard 100 shown in FIG. 1 in an implementation.

As shown in FIG. 22, the first elastic piece 36a connects the first connecting piece 34a to the second connecting piece 35a. The first elastic piece 36a is in a stretched state. In this case, the first elastic piece 36a may be configured to apply a pulling force to the first connecting piece 34a and the second connecting piece 35a.

For example, the first elastic piece 36a may be a spring. A first end 361a (referring to FIG. 15) of the first elastic piece 36a may pass through the first mounting hole 3423a of the first connecting piece 34a, and is hooked on the first connecting shaft 3422a (referring to FIG. 16) of the first connecting piece 34a. A second end 362a (referring to FIG. 15) of the first elastic piece 36a may pass through the second mounting hole 3523a of the second connecting piece 35a, and is hooked on the second connecting shaft 3522a (referring to FIG. 16) of the second connecting piece 35a. A manner of connecting the first elastic piece 36a to the first connecting piece 34a and the second connecting piece 35a in this implementation is relatively simple. In another implementation, when the first elastic piece 36a uses a structure in another form, a manner of connecting the first elastic piece 36a to the first connecting piece 34a and the second connecting piece 35a is not specifically limited. In another implementation, the first key 3a may not use the first elastic piece 36a, but drive the first connecting piece 34a and the second connecting piece 35a to move by using another driving mechanism.

As shown in FIG. 22, when the first key 3a is in the unpressed state, at least a part of the first elastic piece 36a may be located in space surrounded by the first avoidance hole 3421a of the first connecting piece 34a and the second avoidance hole 3521a of the second connecting piece 35a.

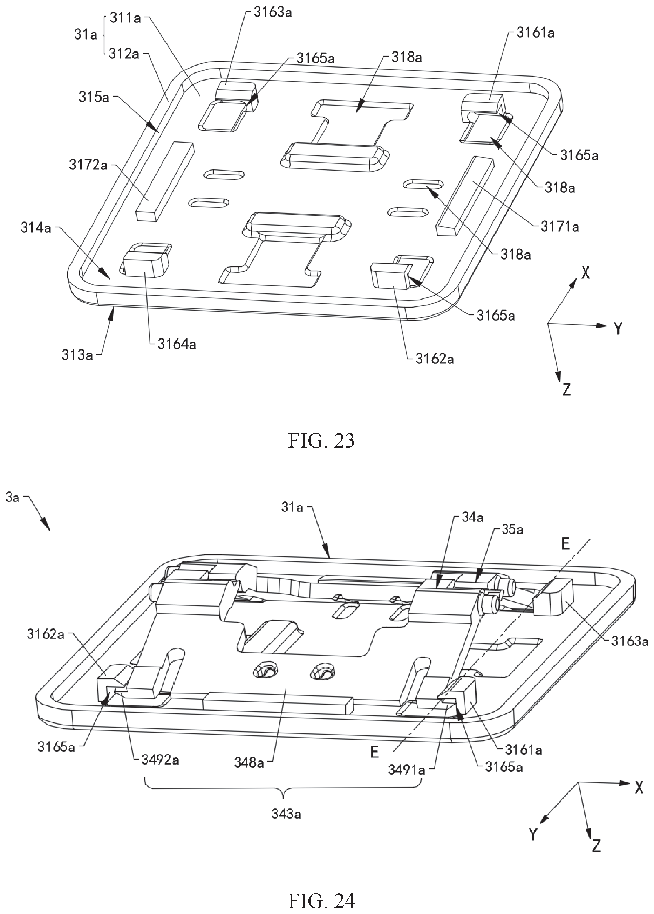

FIG. 23 is a diagram of a structure of the first keycap 31a shown in FIG. 15 at another angle.

As shown in FIG. 23, the first keycap 31a includes a first pressing plate 311a and a first frame 312a. The first pressing plate 311a includes a top surface 313a and a bottom surface 314a that are disposed away from each other. The top surface 313a of the first pressing plate 311a is the top surface 30a of the first key 3a (referring to FIG. 4 to FIG. 11). The first frame 312a is fastened to the bottom surface 314a of the first pressing plate 311a. A first accommodating groove 315a is enclosed by the first pressing plate 311a and the first frame 312a.

For example, the first keycap 31a further includes a first guide rail block 3161a, a second guide rail block 3162a, a third guide rail block 3163a, and a fourth guide rail block 3164a. The first guide rail block 3161a, the second guide rail block 3162a, the third guide rail block 3163a, and the fourth guide rail block 3164a all protrude from the bottom surface 314a of the first pressing plate 311a, and are all located in the first accommodating groove 315a.

In addition, the first guide rail block 3161a, the second guide rail block 3162a, the third guide rail block 3163a, and the fourth guide rail block 3164a each are provided with a guide groove 3165a. The guide groove 3165a of the first guide rail block 3161a is disposed opposite to the guide groove 3165a of the second guide rail block 3162a. The guide groove 3165a of the third guide rail block 3163a is disposed opposite to the guide groove 3165a of the fourth guide rail block 3164a.

For example, the guide grooves 3165a of the first guide rail block 3161a, the second guide rail block 3162a, the third guide rail block 3163a, and the fourth guide rail block 3164a may all be in a strip shape.

As shown in FIG. 23, the first keycap 31a further includes a first stopper 3171a and a second stopper 3172a. Shapes of the first stopper 3171a and the second stopper 3172a may be cuboids, cylinders, or other shapes. This implementation is described by using an example in which the shapes of the first stopper 3171a and the second stopper 3172a are cuboids. Both the first stopper 3171a and the second stopper 3172a protrude from the bottom surface 314a of the first pressing plate 311a, and are located in the first accommodating groove 315a. The first stopper 3171a is located on a same side of the first guide rail block 3161a and the second guide rail block 3162a, and the first stopper 3171a faces space between the first guide rail block 3161a and the second guide rail block 3162a. The second stopper 3172a is located on a same side of the third guide rail block 3163a and the fourth guide rail block 3164a, and the second stopper 3172a faces space between the third guide rail block 3163a and the fourth guide rail block 3164a.

As shown in FIG. 23, the first keycap 31a is further provided with an avoidance groove 318a. An opening of the avoidance groove 318a is located on the bottom surface 314a of the first pressing plate 311a. It may be understood that the avoidance groove 318a may be configured to provide avoidance space for another component of the first key 3a or another component of the keyboard 100, to avoid mutual interference between the another component of the first key 3a or the another component of the keyboard 100 and the first keycap 31a, that is, prevent a case of misplacement, wear, or even break caused by collision between the another component of the first key 3a or the another component of the keyboard 100 and the first keycap 31a. In this way, a service life of the first key 3a is prolonged. In addition, FIG. 23 merely schematically shows some avoidance grooves 318a. A quantity, a shape, a size, and a position of the avoidance groove 318a are not specifically limited in this application. For example, the avoidance groove 318a may be designed based on a specific product form, a size, and the like.

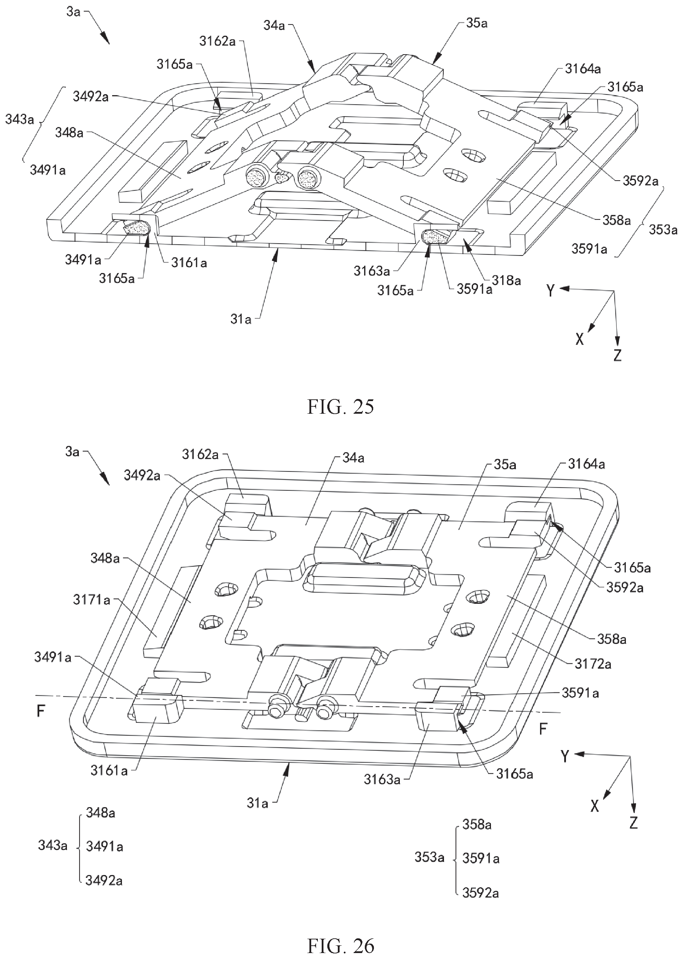

FIG. 24 is a diagram of a partial structure of the first key 3a shown in FIG. 2 in an implementation. FIG. 25 is a partial cross-sectional view of a part of the first key 3a shown in FIG. 24 in an implementation along a line E-E.

As shown in FIG. 24 and FIG. 25, the first movable end 343a of the first connecting piece 34a is movably connected to the first keycap 31a. For example, the first movable end 343a of the first connecting piece 34a is slidably connected to and rotatable relative to the first keycap 31a.

For example, the first body portion 348a of the first movable end 343a of the first connecting piece 34a is located between the first guide rail block 3161a and the second guide rail block 3162a of the first keycap 31a. The first movable portion 3491a of the first movable end 343a of the first connecting piece 34a is located in the guiding groove 3165a of the first guide rail block 3161a of the first keycap 31a, and may slide and rotate in the guiding groove 3165a of the first guide rail block 3161a. The second movable portion 3492a of the first movable end 343a of the first connecting piece 34a is located in the guiding groove 3165a of the second guide rail block 3162a of the first keycap 31a, and may slide and rotate in the guiding groove 3165a of the second guide rail block 3162a.

As shown in FIG. 25, the second movable end 353a of the second connecting piece 35a is movably connected to the first keycap 31a. For example, the second movable end 353a of the second connecting piece 35a is slidably connected to and rotatable relative to the first keycap 31a.

For example, the second body portion 358a of the second movable end 353a of the second connecting piece 35a is located between the third guide rail block 3163a and the fourth guide rail block 3164a of the first keycap 31a. The third movable portion 3591a of the second movable end 353a of the second connecting piece 35a is located in the guide groove 3165a of the third guide rail block 3163a of the first keycap 31a, and may slide and rotate in the guide groove 3165a of the third guide rail block 3163a. The fourth movable portion 3592 of the second movable end 353a of the second connecting piece 35a is located in the guide groove 3165a of the fourth guide rail block 3164a of the first keycap 31a, and may slide and rotate in the guide groove 3165a of the fourth guide rail block 3164a.

As shown in FIG. 25, when the first key 3a is in the unpressed state, the first movable portion 3491a of the first connecting piece 34a abuts against a wall surface of the guide groove 3165a of the first guide rail block 3161a, the second movable portion 3492a of the first connecting piece 34a abuts against a wall surface of the guide groove 3165a of the second guide rail block 3162a, the third movable portion 3591a of the second connecting piece 35a abuts against a wall surface of the guide groove 3165a of the third guide rail block 3163a, and the fourth movable portion 3592 of the second connecting piece 35a abuts against a wall surface of the guide groove 3165a of the fourth guide rail block 3164a. It may be understood that the wall surface of the guide groove 3165a of the first guide rail block 3161a and the wall surface of the guide groove 3165a of the second guide rail block 3162a cooperate with each other, so that the first connecting piece 34a can be restricted from continuing to slide and rotate relative to the first keycap 31a when the first key 3a is in the unpressed state. In addition, the wall surface of the guide groove 3165a of the third guide rail block 3163a and the wall surface of the guide groove 3165a of the fourth guide rail block 3164a cooperate with each other, so that the second connecting piece 35a can be restricted from continuing to slide and rotate relative to the first keycap 31a when the first key 3a is in the unpressed state.

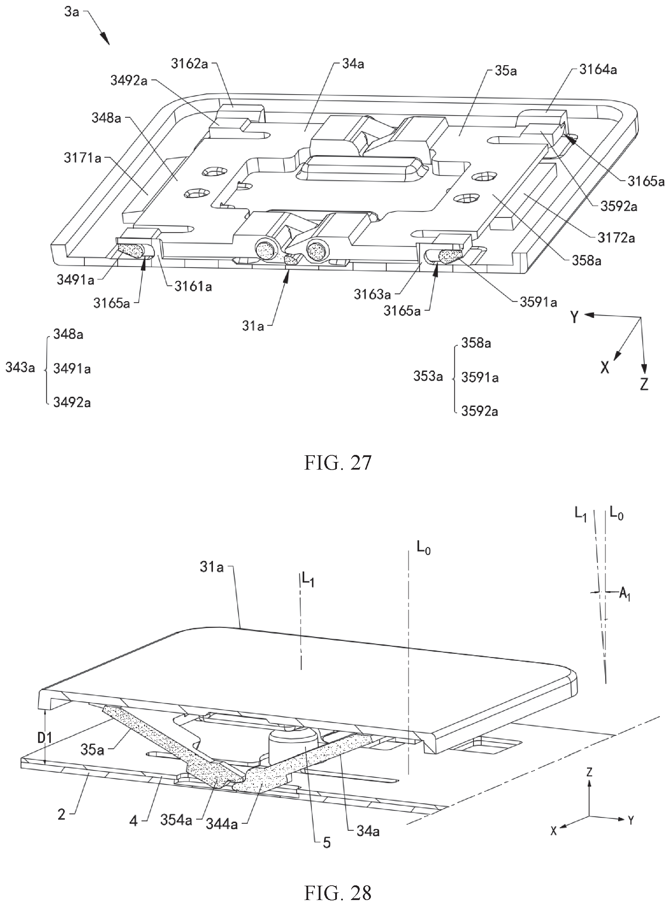

FIG. 26 is a diagram of a structure of a part of the first key 3a shown in FIG. 24 in a triggered state. FIG. 27 is a cross-sectional view of a part of the first key 3a shown in FIG. 26 in an implementation along a line F-F.

As shown in FIG. 26 and FIG. 27, when the first key 3a is in the triggered state, the first movable portion 3491a of the first connecting piece 34a and the wall surface of the guide groove 3165a of the first guide rail block 3161a are separately disposed in the positive direction of the Y-axis, the second movable portion 3492a of the first connecting piece 34a and the wall surface of the guide groove 3165a (referring to FIG. 25) of the second guide rail block 3162a are separately disposed in the positive direction of the Y-axis, the third movable portion 3591a of the second connecting piece 35a and the wall surface of the guide groove 3165a of the third guide rail block 3163a are separately disposed in the negative direction of the Y-axis, and the fourth movable portion 3592 of the second connecting piece 35a and the wall surface of the guide groove 3165a of the fourth guide rail block 3164a are separately disposed in the negative direction of the Y-axis.

As shown in FIG. 26 and FIG. 27, when the first key 3a is in the triggered state, the first body portion 348a of the first movable end 343a of the first connecting piece 34a abuts against the first stopper 3171a, and the second body portion 358a of the second movable end 353a of the second connecting piece 35a abuts against the second stopper 3172a. It may be understood that the first stopper 3171a may be configured to stop the first connecting piece 34a when the first key 3a is in the triggered state, to prevent the first movable end 343a of the first connecting piece 34a from moving out of the guide grooves 3165a of the first guide rail block 3161a and the second guide rail block 3162a. The second stopper 3172a may be configured to stop the second connecting piece 35a when the first key 3a is in the triggered state, to prevent the second movable end 353a of the second connecting piece 35a from moving out of the guide grooves 3165a of the third guide rail block 3163a and the fourth guide rail block 3164a.

FIG. 28 is a partial cross-sectional view of a part of the keyboard 100 shown in FIG. 1 in an implementation along a line G-G.

As shown in FIG. 28, when the first key 3a is in the unpressed state, the first connecting piece 34a and the second connecting piece 35a support the first keycap 31a. In the Z-axis direction, a distance between the first keycap 31a and the triggering end 21 of the circuit board 2 is a first distance D1.

For example, when the first key 3a is in the unpressed state, the first elastic piece 36a (referring to FIG. 22) may be in a stretched state. In this way, the first elastic piece 36a may apply an acting force in the positive direction of the Z-axis to the first keycap 31a through the first connecting piece 34a and the second connecting piece 35a. In this case, when the user accidentally touches the first keycap 31a, the first keycap 31a does not immediately move in the negative direction of the Z-axis, and the first keycap 31a does not squeeze the triggering end 21 of the circuit board 2, causing the circuit board 2 to generate an electrical signal.

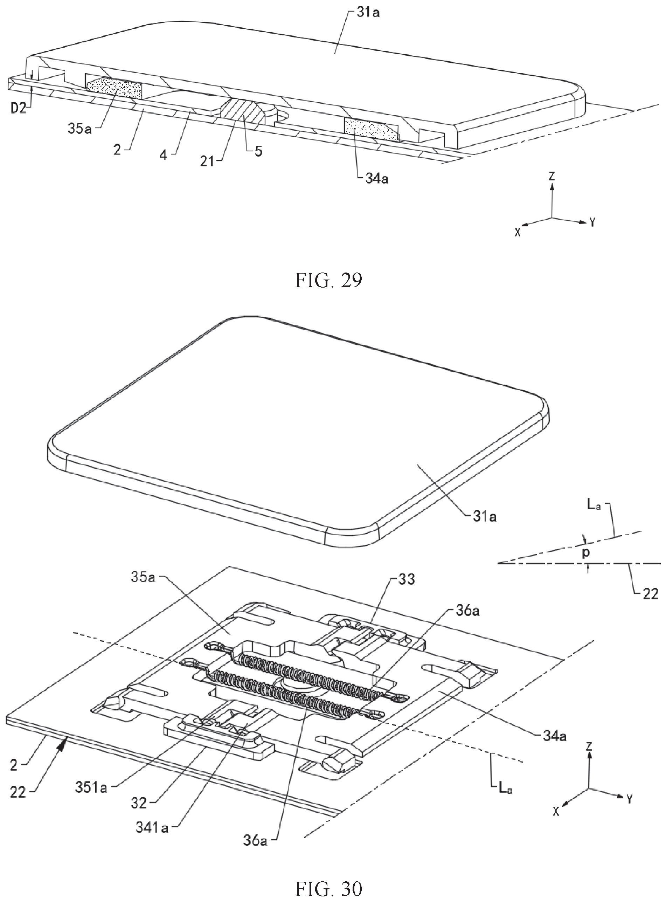

FIG. 29 is a partial cross-sectional view of an implementation of a part of the keyboard 100 shown in FIG. 28 in a triggered state.

As shown in FIG. 29, when the first key 3a is in the triggered state, in the Z-axis direction, a distance between the first keycap 31a and the triggering end 21 of the circuit board 2 is a second distance D2. The second distance D2 is less than the first distance D1 (referring to FIG. 28). In this case, a distance between the first keycap 31a and the triggering end of the circuit board is relatively short.

As shown in FIG. 28 and FIG. 29, when the first key 3a is switched from the unpressed state to the triggered state, the first keycap 31a is pressed, so that the first keycap 31a may move in the negative direction of the Z-axis. The first keycap 31a squeezes the first connecting piece 34a and the second connecting piece 35a, and both the first rotating end 341a of the first connecting piece 34a and the second rotating end 351a of the second connecting piece 35a may rotate relative to the first fastening base 32 and the second fastening base 33. In addition, the first movable end 343a of the first connecting piece 34a may slide and rotate relative to the first keycap 31a, and the second movable end 353a of the second connecting piece 35a may slide and rotate relative to the first keycap 31a. In this way, the first movable end 343a of the first connecting piece 34a and the second movable end 353a of the second connecting piece 35a move away from each other, and the first connecting piece 34a and the second connecting piece 35a are opened, that is, an angle between the first connecting piece 34a and the second connecting piece 35a increases. In addition, the first elastic piece 36a is elongated and is in a stretched state. It may be understood that, when the first keycap 31a moves in the negative direction of the Z-axis, a distance between the first keycap 31a and the triggering end 21 of the circuit board 2 decreases. In this way, the first keycap 31a may indirectly or directly squeeze the triggering end 21 of the circuit board 2, so that the circuit board 2 generates an electrical signal.

It may be understood that, when the first key 3a is switched from the unpressed state to the triggered state, the first elastic piece 36a may apply an acting force in the positive direction of the Z-axis to the first keycap 31a through the first connecting piece 34a and the second connecting piece 35a. In this case, in a process of pressing the first keycap 31a to move in the negative direction of the Z-axis, an acting force applied by the first elastic piece 36a to the first keycap 31a needs to be overcome first, thereby helping improve a comfortable feeling of the user in the process of pressing the first keycap 31a.

In an implementation, the keyboard 100 includes a triggering piece 5, and the triggering piece 5 is an elastic piece. An example in which the triggering piece 5 is fastened to the triggering end 21 of the circuit board 2 is used for description. In this way, when the first keycap 31a moves to be in contact with the triggering piece 5, the first keycap 31a may squeeze the triggering piece 5. The triggering piece 5 can deform and is in a compressed state. The triggering piece 5 may squeeze the triggering end 21 of the circuit board 2 by using an elastic force of the triggering piece 5, so that the circuit board 2 generates an electrical signal.

In an implementation, the keyboard 100 does not include the triggering piece 5. In this case, as the distance between the first keycap 31a and the triggering end 21 of the circuit board 2 decreases, the first keycap 31a may be in direct contact with the triggering end 21 of the circuit board 2, and squeeze the triggering end 21 of the circuit board 2, so that the circuit board 2 generates an electrical signal.

It may be understood that, because the diameter of the pitch circle of the second gear portion 354a of the second connecting piece 35a is the same as the diameter of the pitch circle of the first gear portion 344a of the first connecting piece 34a, when the second gear portion 354a of the second connecting piece 35a is engaged with the first gear portion 344a of the first connecting piece 34a, a rotation angle of the second connecting piece 35a is the same as a rotation angle of the first connecting piece 34a. In this case, a moving speed of a part that is of the first keycap 31a and that is connected to the first connecting piece 34a is the same as a moving speed of a part that is of the first keycap 31a and that is connected to the second connecting piece 35a. When the first key 3a is in the triggered state, the first keycap 31a is approximately disposed in parallel with the circuit board 2, that is, an included angle A₁ between the first central axis L₁ of the first key 3a and the central axis L₀ of the circuit board 2 is relatively small. For example, A₁ may satisfy: 0°≤A₁<3°.

As shown in FIG. 28 and FIG. 29, when the first key 3a is switched from the triggered state to the unpressed state, an acting force is applied to the first connecting piece 34a and the second connecting piece 35a, so that both the first rotating end 341a of the first connecting piece 34a and the second rotating end 351a of the second connecting piece 35a may rotate relative to the first fastening base 32 and the second fastening base 33. Both the first movable end 343a of the first connecting piece 34a and the second movable end 353a of the second connecting piece 35a may slide and rotate relative to the first keycap 31a. In this way, the first movable end 343a of the first connecting piece 34a and the second movable end 353a of the second connecting piece 35a move close to each other, and the first connecting piece 34a and the second connecting piece 35a move close to each other, that is, an angle between the first connecting piece 34a and the second connecting piece 35a decreases. The first connecting piece 34a and the second connecting piece 35a may squeeze the first keycap 31a, so that the first keycap 31a may move in the positive direction of the Z-axis. It may be understood that, when the first keycap 31a moves in the positive direction of the Z-axis, a distance between the first keycap 31a and the triggering end 21 of the circuit board 2 increases. In this way, the first keycap 31a does not indirectly or directly squeeze the triggering end 21 of the circuit board 2, and the circuit board 2 does not generate an electrical signal.

It may be understood that when the first key 3a is switched from the triggered state to the unpressed state, there are a plurality of manners of applying an acting force to the first connecting piece 34a and the second connecting piece 35a. The following describes two implementations in detail with reference to related accompanying drawings.

FIG. 30 is a partial exploded view of the keyboard 100 shown in FIG. 1 in another implementation.

As shown in FIG. 30, the first elastic piece 36a has a first center line La. The first center line La passes through a center of the first elastic piece 36a, and is parallel to a length extension direction of the first elastic piece 36a. It may be understood that, when the first elastic piece 36a is a spring, the first center line La of the first elastic piece 36a may be a central axis of the spring.

When the first key 3a is in the triggered state, the first center line La of the first elastic piece 36a and the top surface 22 of the circuit board 2 form an included angle, that is, the first center line La of the first elastic piece 36a is not parallel to the top surface 22 of the circuit board 2. The top surface 22 of the circuit board 2 is a surface that is of the circuit board 2 and that faces the first key 3a.

It may be understood that, because the first center line La of the first elastic piece 36a is not parallel to the top surface 22 of the circuit board 2, an elastic force applied by the first elastic piece 36a to the first connecting piece 34a and the second connecting piece 35a may generate a component force in the positive direction of the Z-axis. In this case, the component force may enable the first rotating end 341a of the first connecting piece 34a to rotate relative to the first fastening base 32 and the second fastening base 33 in a counterclockwise direction, and enable the second rotating end 351a of the second connecting piece 35a to rotate relative to the first fastening base 32 and the second fastening base 33 in a clockwise direction, so that the first key 3a can be switched from the triggered state to the unpressed state.

In another implementation, when the first key 3a is in the triggered state, the first center line La of the first elastic piece 36a may be alternatively disposed in parallel with the circuit board 2. In this case, another implementation (for example, the following implementation) may be used, so that the first key 3a can be switched from the triggered state to the unpressed state.

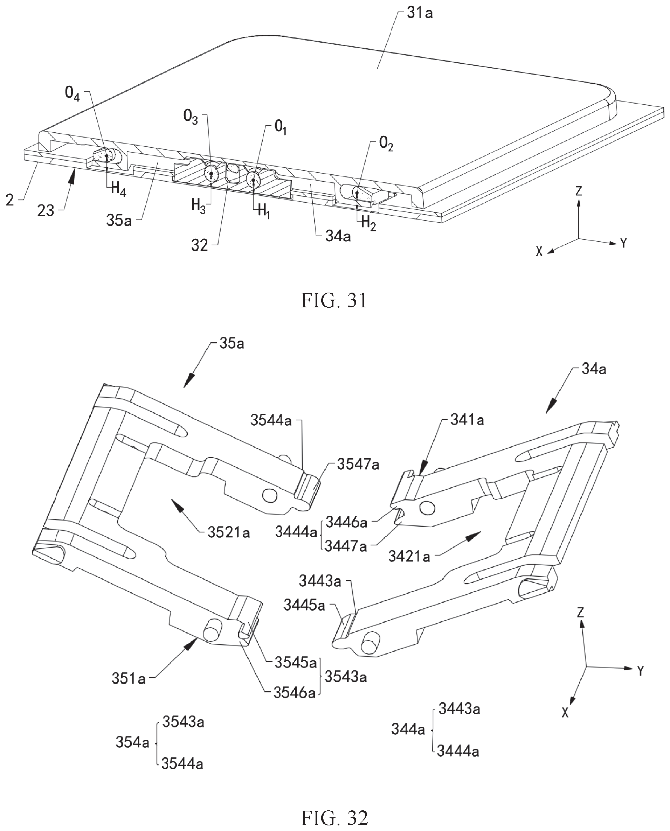

FIG. 31 is a partial cross-sectional view of another implementation of a part of the keyboard 100 shown in FIG. 28 in a triggered state.

As shown in FIG. 31, a center of rotation of the first connecting piece 34a relative to the first fastening base 32 is a first rotation center O₁. A center of rotation of the first connecting piece 34a relative to the first keycap 31a is a second rotation center O₂. A distance between the first rotation center O₁ and the bottom surface 23 of the circuit board 2 is a first height H₁. A distance between the second rotation center O₂ and the bottom surface 23 of the circuit board 2 is a second height H₂. The bottom surface 23 of the circuit board 2 is a surface that is of the circuit board 2 and that faces away from the first keycap 31a.

When the first key 3a is in the triggered state, the first height H₁ is less than the second height H₂, that is, H₁ and H₂ satisfy: H₁<H₂. In this case, an elastic force applied by the first elastic piece 36a to the first connecting piece 34a may generate a component force in the positive direction of the Z-axis. The component force may enable the first rotating end 341a of the first connecting piece 34a to rotate relative to the first fastening base 32 and the second fastening base 33 in a counterclockwise direction. With reference to FIG. 19, because the first gear portion 344a of the first rotating end 341a of the first connecting piece 34a is engaged with the second gear portion 354a of the second rotating end 351a of the second connecting piece 35a, the first rotating end 341a of the first connecting piece 34a and the second rotating portion 355a of the second connecting piece 35a may rotate synchronously, that is, the second rotating end 351a of the second connecting piece 35a may rotate relative to the first fastening base 32 and the second fastening base 33 in a clockwise direction, so that the first key 3a can be switched from the triggered state to the unpressed state.

Similarly, a distance between a center O₃ of rotation of the second connecting piece 35a relative to the first fastening base 32 and the bottom surface 23 of the circuit board 2 is a third height H₃. A distance between a center O₄ of rotation of the second connecting piece 35a relative to the first keycap 31a and the bottom surface 23 of the circuit board 2 is a fourth height H₄. When the first key 3a is in the triggered state, the third height H₃ is less than the fourth height H₄, that is, H₃ and H₄ satisfy: H₃<H₄. In this way, an elastic force applied by the first elastic piece 36a to the second connecting piece 35a may generate a component force in the positive direction of the Z-axis. The component force may enable the first key 3a to switch from the triggered state to the unpressed state.

In another implementation, when the first key 3a is in the triggered state, the second height H₂ may be equal to the first height H₁, and the fourth height H₄ may be equal to the third height H₃. In this case, another implementation (for example, the following implementation) may be used, so that the first key 3a can be switched from the triggered state to the unpressed state.

As shown in FIG. 28 and FIG. 29, the keyboard 100 includes a triggering piece 5, and the triggering piece 5 is an elastic piece. An example in which the triggering piece 5 is fastened to the triggering end 21 of the circuit board 2 is used for description. When the first key 3a is in the triggered state, the triggering piece 5 is in a compressed state, and the triggering piece 5 may squeeze the triggering end 21 of the circuit board 2 by using an elastic force of the triggering piece 5, so that the circuit board 2 generates an electrical signal.

When the first key 3a is switched from the triggered state to the unpressed state, because the first keycap 31a is no longer subject to a pressing force, an elastic force applied by the triggering piece 5 to the first keycap 31a may enable the first keycap 31a to move in the positive direction of the Z-axis. In this case, the first keycap 31a may apply an acting force to the first connecting piece 34a and the second connecting piece 35a, so that the first rotating end 341a of the first connecting piece 34a may rotate relative to the first fastening base 32 and the second fastening base 33 in a counterclockwise direction, and the second rotating end 351a of the second connecting piece 35a may rotate relative to the first fastening base 32 and the second fastening base 33 in a clockwise direction. In this way, the first key 3a may be switched from the triggered state to the unpressed state.

The foregoing specifically describes a structure of the first key 3a with reference to related accompanying drawings. The following describes an assembly manner of the first key 3a with reference to related accompanying drawings.

With reference to FIG. 22, first, one end of the first elastic piece 36a is connected to the first connecting piece 34a, and the other end is connected to the second connecting piece 35a.

With reference to FIG. 19, then, the first gear portion 344a of the first rotating end 341a of the first connecting piece 34a is engaged with the second gear portion 354a of the second rotating end 351a of the second connecting piece 35a.

With reference to FIG. 18, then, the first rotating end 341a of the first connecting piece 34a is rotatably connected to the first fastening base 32 and the second fastening base 33, at least a part of the first stop portion 347a of the first rotating end 341a of the first connecting piece 34a is located in the first stop groove 327 of the first fastening base 32 and abuts against the bottom wall of the first stop groove 327, the second rotating end 351a of the second connecting piece 35a is rotatably connected to the first fastening base 32 and the second fastening base 33, and at least a part of the second stop portion 357a of the second rotating end 351a of the second connecting piece 35a is located in the second stop groove 337 of the second fastening base 33 and abuts against the bottom wall of the second stop groove 337.

With reference to FIG. 14A and FIG. 14B, the first fastening base 32 and the second fastening base 33 are fastened on the circuit board 2, and are respectively on two sides of the triggering end 21.

With reference to FIG. 23 to FIG. 25, finally, both the first movable end 343a of the first connecting piece 34a and the second movable end 353a of the second connecting piece 35a are movably connected to the first keycap 31a.

It may be understood that, when the keyboard 100 includes the triggering piece 5, the triggering piece 5 may be mounted on the first keycap 31a in advance, or mounted on the triggering end 21 in advance, or the like.

With reference to the related accompanying drawings, the foregoing specifically describes several implementations of switching the first key 3a from the triggered state to the unpressed state. Other structures of the first connecting piece 34a and the second connecting piece 35a are further described in detail below with reference to related accompanying drawings.

FIG. 32 is a diagram of a structure of the first connecting piece 34a and the second connecting piece 35a shown in FIG. 15 in another implementation.

As shown in FIG. 32, a first avoidance hole 3421a is provided on the first connecting piece 34a. The first avoidance hole 3421a divides the first gear portion 344a of the first rotating end 341a of the first connecting piece 34a into a first gear sub-portion 3443a and a second gear sub-portion 3444a that are spaced apart from each other.

For example, the first gear sub-portion 3443a of the first connecting piece 34a includes a first tooth 3445a. The second gear sub-portion 3444a of the first connecting piece 34a includes a second tooth 3446a and a third tooth 3447a that are spaced apart from and opposite to each other.

As shown in FIG. 32, a second avoidance hole 3521a is provided on the second connecting piece 35a. The second avoidance hole 3521a divides the second gear portion 354a of the second rotating end 351a of the second connecting piece 35a into a first gear sub-portion 3543a and a second gear sub-portion 3544a that are spaced apart from each other.

For example, the first gear sub-portion 3543a of the second connecting piece 35a includes a first tooth 3545a and a second tooth 3546a that are spaced apart from and opposite to each other. The second gear sub-portion 3544a of the second connecting piece 35a includes a third tooth 3547a.

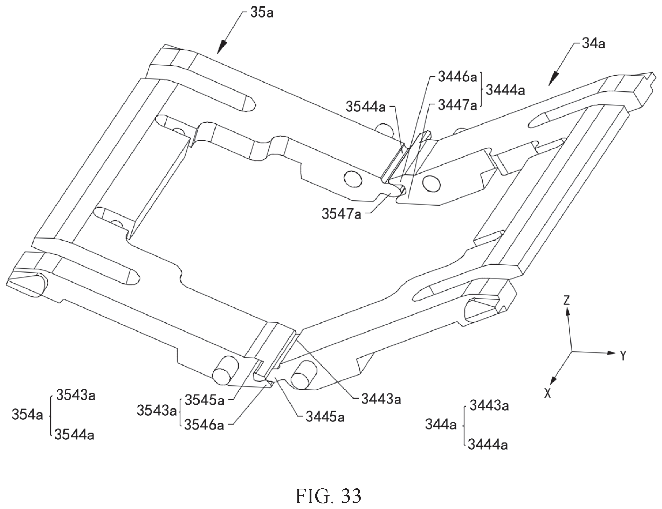

FIG. 33 is a diagram of assembling the first connecting piece 34a and the second connecting piece 35a shown in FIG. 32.

As shown in FIG. 32 and FIG. 33, the first gear sub-portion 3443a of the first connecting piece 34a may be engaged with the first gear sub-portion 3543a of the second connecting piece 35a. The first tooth 3445a of the first connecting piece 34a may be located between the first tooth 3545a and the second tooth 3546a of the second connecting piece 35a.

As shown in FIG. 32 and FIG. 33, the second gear sub-portion 3444a of the first connecting piece 34a may be engaged with the second gear sub-portion 3544a of the second connecting piece 35a. The third tooth 3547a of the second connecting piece 35a may be located between the second tooth 3446a and the third tooth 3447a of the first connecting piece 34a.

It may be understood that, through design, the first gear sub-portion 3443a of the first connecting piece 34a is engaged with the first gear sub-portion 3543a of the second connecting piece 35a, and the second gear sub-portion 3444a of the first connecting piece 34a is engaged with the second gear sub-portion 3544a of the second connecting piece 35a, so that the first rotating end 341a of the first connecting piece 34a is engaged with the second rotating end 351a of the second connecting piece 35a.

It may be understood that, in comparison with the tooth-shaped structure in which the first gear portion 344a of the first connecting piece 34a and the second gear portion 354a of the second connecting piece 35a are arranged in a staggered manner shown in FIG. 16 and FIG. 17, in this implementation, the first gear portion 344a of the first connecting piece 34a and the second gear portion 354a of the second connecting piece 35a have a longer dimension in the X-axis direction. In this way, the first gear portion 344a of the first connecting piece 34a and the second gear portion 354a of the second connecting piece 35a have high structural strength and are not prone to damage.

It may be understood that, in comparison with the tooth-shaped structure of the first gear portion 344a of the first connecting piece 34a and the second gear portion 354a of the second connecting piece 35a shown in FIG. 32 and FIG. 33, the tooth-shaped structure in which the first gear portion 344a of the first connecting piece 34a and the second gear portion 354a of the second connecting piece 35a are arranged in a staggered manner shown in FIG. 16 and FIG. 17 has a smaller thickness in the Z-axis direction, thereby facilitating thinning of the first key 3a.

The foregoing specifically describes a structure of the first key 3a with reference to related accompanying drawings. The following describes a structure of the second key 3b in detail with reference to related accompanying drawings. It may be understood that the structure of the second key 3b in this implementation is mostly the same as the structure of the first key 3a. For a basic design of a component structure of the second key 3b, a design of a connection relationship between components, and a design of a connection relationship other than components and parts, refer to the related solution of the first key 3a. In addition, the second key 3b and the first key 3a are allowed to be slightly different in detail structures or position arrangements of components. Details are not described herein. Same technical content of the second key 3b and the first key 3a is not described in detail herein. The following focuses on differences between the second key 3b and the first key 3a.

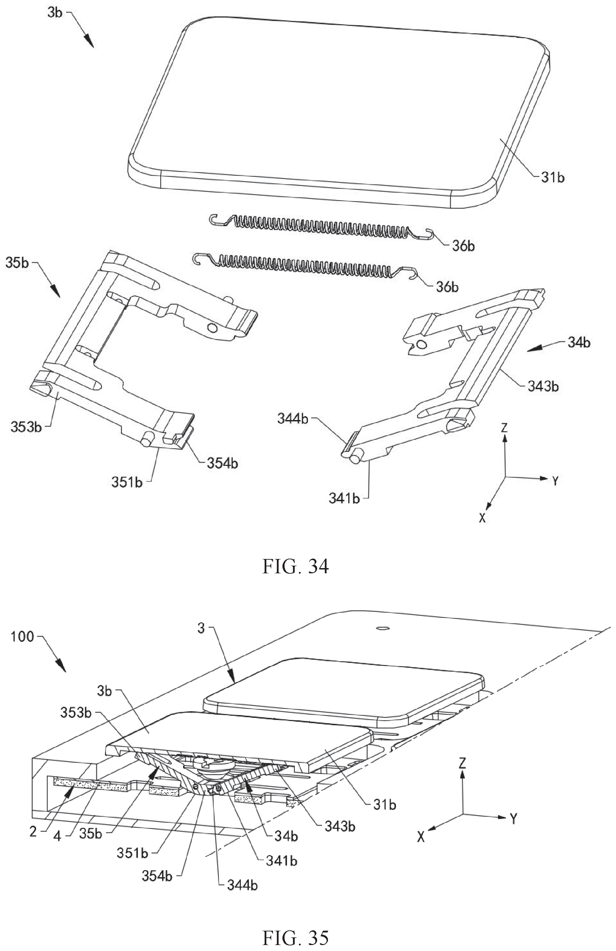

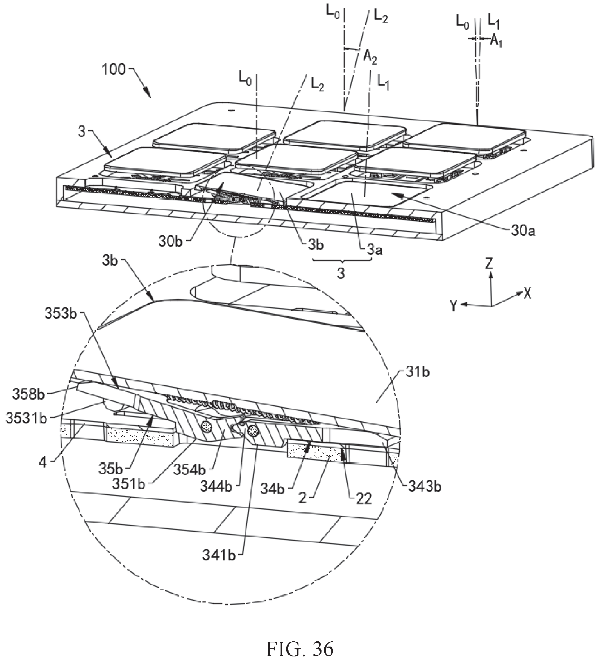

FIG. 34 is a partial exploded view of the second key 3b shown in FIG. 2 in an implementation. FIG. 35 is a partial cross-sectional view of the keyboard 100 shown in FIG. 1 in an implementation along a line H-H. FIG. 36 is a partial cross-sectional view of an implementation of the second key 3b of the keyboard 100 shown in FIG. 35 in a triggered state.

As shown in FIG. 34 to FIG. 36, the second key 3b includes a second keycap 31b, a third connecting piece 34b, a fourth connecting piece 35b, and a second elastic piece 36b. For a basic design of component structures of the second keycap 31b, the third connecting piece 34b, the fourth connecting piece 35b, and the second elastic piece 36b, a design of a connection relationship between components, and a design of a connection relationship other than components and parts, refer to the related solutions of the first keycap 31a, the first connecting piece 34a, the second connecting piece 35a, and the second elastic piece 36b of the first key 3a. For example, the third connecting piece 34b includes a first rotating end 341b and a first movable end 343b. The first rotating end 341b of the third connecting piece 34b is rotatably connected to the circuit board 2, the first movable end 343b of the third connecting piece 34b is movably connected to the second keycap 3 lb, the fourth connecting piece 35b includes a second rotating end 351b and a second movable end 353b, the second rotating end 351b of the fourth connecting piece 35b is rotatably connected to the circuit board 2, and the second movable end 353b of the fourth connecting piece 35b is movably connected to the second keycap 31b. The first rotating end 341b of the third connecting piece 34b includes a first gear portion 344b, the second rotating end 351b of the fourth connecting piece 35b includes a second gear portion 354b, and the first gear portion 344b of the third connecting piece 34b is engaged with the second gear portion 354b of the fourth connecting piece 35b. It may be understood that structures of the first gear portion 344b of the third connecting piece 34b and the second gear portion 354b of the fourth connecting piece 35b are not limited to the structures shown in FIG. 34 to FIG. 36, but may alternatively be the structure shown in FIG. 16. In this case, the first gear portion 344b of the third connecting piece 34b and the second gear portion 354b of the fourth connecting piece 35b may be arranged in a staggered and engaged manner.

In this implementation, a diameter of a pitch circle of the first gear portion 344b of the third connecting piece 34b of the second key 3b is not equal to a diameter of a pitch circle of the second gear portion 354a of the fourth connecting piece 35b, that is, a ratio of the diameter of the pitch circle of the first gear portion 344b of the third connecting piece 34b to the diameter of the pitch circle of the second gear portion 354a of the fourth connecting piece 35b is not equal to 1. In this way, when the first gear portion 344b of the third connecting piece 34b is engaged with the second gear portion 354b of the fourth connecting piece 35b, a rotation angle of the third connecting piece 34b is different from a rotation angle of the fourth connecting piece 35b. In this case, a moving speed of a part that is of the second keycap 31b and that is connected to the third connecting piece 34b is different from a moving speed of a part that is of the second keycap 31b and that is connected to the fourth connecting piece 35b. When the second key 3b is in the triggered state, the second keycap 31b is disposed in an inclined manner relative to the circuit board 2. An included angle A₂ between the second central axis L₂ of the second key 3b and the central axis L₀ of the circuit board 2 is relatively large. For example, A₂ may satisfy: A₂≥3°. However, in the foregoing description in FIG. 15 to FIG. 33, the diameter of the pitch circle of the first gear portion 344a of the first connecting piece 34a of the first key 3a is equal to the diameter of the pitch circle of the second gear portion 354a of the second connecting piece 35a of the first key 3a, that is, a ratio of the diameter of the pitch circle of the first gear portion 344a of the first connecting piece 34a of the first key 3a to the diameter of the pitch circle of the second gear portion 354a of the second connecting piece 35a of the first key 3a is 1. In this way, when the first gear portion 344a of the first connecting piece 34a is engaged with the second gear portion 354a of the second connecting piece 35a, a rotation angle of the first connecting piece 34a may be the same as a rotation angle of the second connecting piece 35a. In this case, regardless of whether the first key 3a is in the unpressed state or the first key 3a is in the triggered state, an angle between the first central axis L₁ of the first key 3a and the circuit board 2 is approximately unchanged. In this case, when the first key 3a is in the triggered state, the included angle A₁ between the first central axis L₁ of the first key 3a and the central axis L₀ of the circuit board 2 is relatively small. Therefore, when both the first key 3a and the second key 3b are in the triggered state, the included angle A₂ between the second central axis L₂ of the second key 3b and the central axis L₀ of the circuit board 2 is greater than the included angle A₁ between the first central axis L₁ of the first key 3a and the central axis L₀ of the circuit board 2, that is, A₂>A₁. The included angle b between the first central axis L₁ of the first key 3a and the second central axis L₂ of the second key 3b is also relatively large. For example, b satisfies: b≥3°.

For example, the diameter of the pitch circle of the first gear portion 344b of the third connecting piece 34b is less than the diameter of the pitch circle of the second gear portion 354a of the fourth connecting piece 35b, that is, a ratio of the diameter of the pitch circle of the first gear portion 344b of the third connecting piece 34b to the diameter of the pitch circle of the second gear portion 354a of the fourth connecting piece 35b is less than 1. In this way, when the first gear portion 344b of the third connecting piece 34b is engaged with the second gear portion 354b of the fourth connecting piece 35b, a rotation angle of the third connecting piece 34b is greater than a rotation angle of the fourth connecting piece 35b. Compared with the second gear portion 354b of the fourth connecting piece 35b, the first gear portion 344b of the third connecting piece 34b is close to the first key 3a. In this case, when both the first key 3a and the second key 3b are in the triggered state, the second keycap 31b of the second key 3b tilts in a direction close to the first key 3a. It may be understood that different tilt degrees of the second keycap 31b of the second key 3b may be implemented by setting the ratio of the diameter of the pitch circle of the first gear portion 344b of the third connecting piece 34b to the diameter of the pitch circle of the second gear portion 354a of the fourth connecting piece 35b. In other words, when a difference between the diameter of the pitch circle of the first gear portion 344b of the third connecting piece 34b and the diameter of the pitch circle of the second gear portion 354a of the fourth connecting piece 35b is relatively large, a tilt degree of the second keycap 31b of the second key 3b is greater.

It may be understood that the diameter of the pitch circle of the first gear portion 344a of the first connecting piece 34a of the first key 3a is the first diameter. The diameter of the pitch circle of the second gear portion 354a of the second connecting piece 35a of the first key 3a is the second diameter. The ratio of the largest value to the smallest value in the first diameter and the second diameter is the first value when the first diameter is not equal to the second diameter. For example, the first diameter is 2 millimeters, and the second diameter is 5 millimeters. In this case, the first diameter is the smallest value, and the second diameter is the largest value. In this case, the first value is a ratio of 5 to 2, that is, 2.5. The ratio of the first diameter to the second diameter is the first value when the first diameter is equal to the second diameter. This implementation is described by using an example in which the first diameter is equal to the second diameter (that is, the first value is equal to 1). In addition, the diameter of the pitch circle of the first gear portion 344b of the third connecting piece 34b of the second key 3b is the third diameter. The diameter of the pitch circle of the second gear portion 354a of the fourth connecting piece 35b is the fourth diameter. The third diameter is not equal to the fourth diameter, and the ratio of the largest value to the smallest value in the third diameter and the fourth diameter is the second value. For example, the third diameter is 2 millimeters, and the fourth diameter is 6 millimeters. In this case, the third diameter is the smallest value. The fourth diameter is the largest value. In this case, the second value is a ratio of 6 to 2, that is, 3. In this implementation, the second value is greater than the first value.

In this implementation, the second value is set to be greater than the first value, so that when both the first key 3a and the second key 3b are in the triggered state, tilt angles of the first keycap 31a of the first key 3a and the second keycap 31b of the second key 3b relative to the circuit board 2 are different, and the tilt angle of the second keycap 31b of the second key 3b is larger than that of the first keycap 31a of the first key 3a. In this way, the included angle b between the first central axis L₁ of the first key 3a and the second central axis L₂ of the second key 3b is relatively large, so that the orientations of the top surface 30a of the first key 3a and the top surface 30b of the second key 3b are different. In this case, when both the first key 3a and the second key 3b are in the triggered state, a disposing manner of the first key 3a and the second key 3b can satisfy an ergonomic theory, and user experience is better. It may be understood that, when the difference between the second value and the first value is larger, compared with the first keycap 31a of the first key 3a, the second keycap 31b of the second key 3b has a larger tilt angle. In this way, the included angle b between the first central axis L₁ of the first key 3a and the second central axis L₂ of the second key 3b is larger. When the difference between the second value and the first value is smaller, the tilt angle of the first keycap 31a of the first key 3a is closer to the tilt angle of the second keycap 31b of the second key 3b. In this way, the included angle b between the first central axis L₁ of the first key 3a and the second central axis L₂ of the second key 3b is smaller.

It may be understood that, when the keyboard 100 includes the third key 3c, for a structure of the third key 3c and a relationship between the structure of the third key 3c and the structure of the first key 3a, refer to the relationship between the structure of the second key 3b and the structure of the first key 3a. In this way, when both the first key 3a and the third key 3c are in the triggered state, orientations of the top surface 30a of the first key 3a and the top surface 30c of the third key 3c are different.

As shown in FIG. 36, for example, the second movable end 353b of the fourth connecting piece 35b further includes a limiting block 3531b. The limiting block 3531b protrudes from a bottom surface of the second body portion 358b of the second movable end 353b of the fourth connecting piece 35b. The bottom surface of the second body portion 358b of the fourth connecting piece 35b is a surface that is of the second body portion 358b of the fourth connecting piece 35b and that is away from the second keycap 31b.

It may be understood that, when the second key 3b is in the triggered state, the limiting block 3531b may abut against the reinforcement plate 4, so that a form of the second keycap 31b is maintained, and a case in which the second gear portion 354b of the fourth connecting piece 35b and the first gear portion 344b of the third connecting piece 34b are broken due to overfolding of the fourth connecting piece 35b is avoided, thereby ensuring that the third connecting piece 34b and the fourth connecting piece 35b have high reliability. In another implementation, when no reinforcement plate 4 is disposed on the circuit board 2, or the reinforcement plate 4 is not disposed on the top surface 22 of the circuit board 2, the limiting block 3531b may directly abut against the circuit board 2. This is not specifically limited in this application.

It should be noted that embodiments of this application and features in embodiments may be combined with each other without a conflict, and any combination of features in different embodiments also falls within the protection scope of this application. In other words, the plurality of embodiments described above may be further combined according to an actual requirement.

It should be noted that all the foregoing accompanying drawings are example figures of this application, and do not represent actual sizes of products. In addition, a size proportional relationship between components in the accompanying drawings is not intended to limit an actual product in this application. The above descriptions are only some embodiments and implementations of this application, and the protection scope of this application is not limited to this. Any variation or replacement readily figured out by a person skilled in the art within the technical scope disclosed in this application shall fall within the protection scope of this application. Therefore, the protection scope of this application shall be subject to the protection scope of the claims.

## Claims

1. A keyboard (100), comprising a housing (1), a circuit board (2), and a plurality of keys (3), wherein the circuit board (2) is mounted on the housing (1), the plurality of keys (3) are mounted on the circuit board (2), and the plurality of keys (3) each comprise an unpressed state and a triggered state;
the plurality of keys (3) comprise a first key (3a) and a second key (3b), a first central axis (L₁) of the first key (3a) is perpendicular to a top surface (30a) of the first key (3a) and passes through a center of the top surface (30a) of the first key (3a), and a second central axis (L₂) of the second key (3b) is perpendicular to a top surface (30b) of the second key (3b) and passes through a center of the top surface (30b) of the second key (3b); and
when both the first key (3a) and the second key (3b) are in the unpressed state, an included angle between the first central axis (L₁) and the second central axis (L₂) is a, and a satisfies: 0°≤a<M₁, wherein 0°<M₁≤10°; or
when both the first key (3a) and the second key (3b) are in the triggered state, an included angle between the first central axis (L₁) and the second central axis (L₂) is b, and b satisfies: b≥M₁.

2. The keyboard (100) according to claim 1, wherein a central axis (L₀) of the circuit board (2) is perpendicular to a top surface (22) of the circuit board (2) and passes through a center of the top surface (22) of the circuit board (2), and the top surface (22) of the circuit board (2) is a surface that is of the circuit board (2) and that faces the keys (3); and
when both the first key (3a) and the second key (3b) are in the triggered state, the top surface (30b) of the second key (3b) tilts in a direction close to the first key (3a), an included angle between the first central axis (L₁) and the central axis (L₀) is A₁, an included angle between the second central axis (L₂) and the central axis (L₀) is A₂, and A₁ and A₂ satisfy: A₂>A₁.

3. The keyboard (100) according to claim 2, wherein A₁ and A₂ satisfy: 0°≤A₁<3° and A₂≥3°.

4. The keyboard (100) according to any one of claims 1 to 3, wherein the plurality of keys (3) further comprise a third key (3c), and the third key (3c) is spaced apart from both the first key (3a) and the second key (3b);
a third central axis (L₃) of the third key (3c) is perpendicular to a top surface (30c) of the third key (3c) and passes through a center of the top surface (30c) of the third key (3c); and
when both the first key (3a) and the third key (3c) are in the unpressed state, an included angle between the third central axis (L₃) and the first central axis (L₁) is c, and c satisfies: 0°≤c<M₂, wherein 0°<M₂≤10°; or
when both the first key (3a) and the third key (3c) are in the triggered state, an included angle between the third central axis (L₃) and the first central axis (L₁) is d, and d satisfies: d≥M₂.

5. The keyboard (100) according to claim 4, wherein the third key (3c) is located on a side that is of the second key (3b) and that is away from the first key (3a); and
when the first key (3a), the second key (3b), and the third key (3c) are all in the triggered state, the top surface (30c) of the third key (3c) tilts in a direction close to the first key (3a), and b and d satisfy: d>b.

6. The keyboard (100) according to claim 5, wherein the central axis (L₀) of the circuit board (2) is perpendicular to the top surface (22) of the circuit board (2) and passes through the center of the top surface (22) of the circuit board (2), and the top surface (22) of the circuit board (2) is the surface that is of the circuit board (2) and that faces the keys (3); and
when both the second key (3b) and the third key (3c) are in the triggered state, an included angle between the second central axis (L₂) and the central axis (L₀) is A₂, an included angle between the third central axis (L₃) and the central axis (L₀) is A₃, and A₂ and A₃ satisfy: A₃>A₂.

7. The keyboard (100) according to claim 4, wherein the third key (3c) is located on a side that is of the first key (3a) and that is away from the second key (3b); and
when both the first key (3a) and the third key (3c) are in the triggered state, the top surface (30c) of the third key (3c) tilts in a direction close to the first key (3a), an included angle between the first central axis (L₁) and the central axis (L₀) is A₁, an included angle between the third central axis (L₃) and the central axis (L₀) is A₃, and A₁ and A₃ satisfy: A₃>A₁.

8. The keyboard (100) according to any one of claims 1 to 7, wherein the first key (3a) comprises a first keycap (31a), a first connecting piece (34a), and a second connecting piece (35a);
the first connecting piece (34a) comprises a first rotating end (341a) and a first movable end (343a), the first rotating end (341a) of the first connecting piece (34a) is rotatably connected to the circuit board (2), the first movable end (343a) of the first connecting piece (34a) is movably connected to the first keycap (31a), the second connecting piece (35a) comprises a second rotating end (351a) and a second movable end (353a), the second rotating end (351a) of the second connecting piece (35a) is rotatably connected to the circuit board (2), and the second movable end (353a) of the second connecting piece (35a) is movably connected to the first keycap (31a);
the first rotating end (341a) of the first connecting piece (34a) comprises a first gear portion (344a), the second rotating end (351a) of the second connecting piece (35a) comprises a second gear portion (354a), the first gear portion (344a) of the first connecting piece (34a) is engaged with the second gear portion (354a) of the second connecting piece (35a), a diameter of a pitch circle of the first gear portion (344a) of the first connecting piece (34a) is a first diameter, a diameter of a pitch circle of the second gear portion (354a) of the second connecting piece (35a) is a second diameter, and a ratio of a largest value to a smallest value in the first diameter and the second diameter is a first value when the first diameter is not equal to the second diameter, or a ratio of the first diameter to the second diameter is a first value when the first diameter is equal to the second diameter;
the second key (3b) comprises a second keycap (31b), a third connecting piece (34b), and a fourth connecting piece (35b), the third connecting piece (34b) comprises a first rotating end (341b) and a first movable end (343b), the first rotating end (341b) of the third connecting piece (34b) is rotatably connected to the circuit board (2), the first movable end (343b) of the third connecting piece (34b) is movably connected to the second keycap (31b), the fourth connecting piece (35b) comprises a second rotating end (351b) and a second movable end (353b), the second rotating end (351b) of the fourth connecting piece (35b) is rotatably connected to the circuit board (2), and the second movable end (353b) of the fourth connecting piece (35b) is movably connected to the second keycap (31b); and
the first rotating end (341b) of the third connecting piece (34b) comprises a first gear portion (344b), the second rotating end (351b) of the fourth connecting piece (35b) comprises a second gear portion (354b), the first gear portion (344b) of the third connecting piece (34b) is engaged with the second gear portion (354b) of the fourth connecting piece (35b), a diameter of a pitch circle of the first gear portion (344b) of the third connecting piece (34b) is a third diameter, a diameter of a pitch circle of the second gear portion (354b) of the fourth connecting piece (35b) is a fourth diameter, the third diameter is not equal to the fourth diameter, a ratio of a largest value to a smallest value in the third diameter and the fourth diameter is a second value, and the second value is greater than the first value.

9. The keyboard (100) according to claim 8, wherein the first diameter is equal to the second diameter, and the third diameter is less than the fourth diameter.

10. The keyboard (100) according to claim 8 or 9, wherein the first connecting piece (34a) is provided with a first avoidance hole (3421a), and the first avoidance hole (3421a) divides the first gear portion (344a) of the first rotating end (341a) of the first connecting piece (34a) into a first gear sub-portion (3443a) and a second gear sub-portion (3444a);
the second connecting piece (35a) is provided with a second avoidance hole (3521a), and the second avoidance hole (3521a) divides the second gear portion (354a) of the second rotating end (351a) of the second connecting piece (35a) into a first gear sub-portion (3543a) and a second gear sub-portion (3544a); and
the first avoidance hole (3421a) of the first connecting piece (34a) is in communication with the second avoidance hole (3521a) of the second connecting piece (35a), the first gear sub-portion (3443a) of the first connecting piece (34a) is engaged with the first gear sub-portion (3543a) of the second connecting piece (35a), and the second gear sub-portion (3444a) of the first connecting piece (34a) is engaged with the second gear sub-portion (3544a) of the second connecting piece (35a).

11. The keyboard (100) according to claim 10, wherein the first gear sub-portion (3443a) of the first connecting piece (34a) comprises a first tooth (3445a) and a second tooth (3446a), the second tooth (3446a) of the first connecting piece (34a) is located on a side that is of the first tooth (3445a) of the first connecting piece (34a) and that is close to the second gear sub-portion (3444a) of the first connecting piece (34a), the first gear sub-portion (3543a) of the second connecting piece (35a) comprises a first tooth (3545a) and a second tooth (3546a), and the second tooth (3546a) of the second connecting piece (35a) is located on a side that is of the first tooth (3545a) of the second connecting piece (35a) and that is close to the second gear sub-portion (3544a) of the second connecting piece (35a); and
the first tooth (3445a) of the first connecting piece (34a) is engaged with the first tooth (3545a) of the second connecting piece (35a), the second tooth (3446a) of the first connecting piece (34a) is engaged with the second tooth (3546a) of the second connecting piece (35a), and a connection line between the first tooth (3445a) and the second tooth (3446a) of the first connecting piece (34a) intersects a connection line between the first tooth (3545a) and the second tooth (3546a) of the second connecting piece (35a).

12. The keyboard (100) according to claim 10, wherein the first gear sub-portion (3443a) of the first connecting piece (34a) comprises a first tooth (3445a), and the first gear sub-portion (3543a) of the second connecting piece (35a) comprises a first tooth (3545a) and a second tooth (3546a) that are spaced apart from and opposite to each other; and
the first tooth (3445a) of the first connecting piece (34a) is located between the first tooth (3545a) and the second tooth (3546a) of the second connecting piece (35a).

13. The keyboard (100) according to any one of claims 8 to 12, wherein the first connecting piece (34a) comprises a first connecting section (342a), and the first connecting section (342a) of the first connecting piece (34a) connects the first rotating end (341a) of the first connecting piece (34a) to the first movable end (343a) of the first connecting piece (34a);
the second connecting piece (35a) comprises a second connecting section (352a), and the second connecting section (352a) of the second connecting piece (35a) connects the second rotating end (351a) of the second connecting piece (35a) to the second movable end (353a) of the second connecting piece (35a); and
the first key (3a) further comprises a first elastic piece (36a), the first elastic piece (36a) connects the first connecting section (342a) of the first connecting piece (34a) to the second connecting section (352a) of the second connecting piece (35a), and the first elastic piece (36a) is in a stretched state.

14. The keyboard (100) according to claim 13, wherein a first center line (La) of the first elastic piece (36a) passes through a center of the first elastic piece (36a) and is parallel to a length extension direction of the first elastic piece (36a); and
the first center line (La) and the top surface (22) of the circuit board (2) form an included angle when the first key (3a) is in the triggered state, and the top surface (22) of the circuit board (2) is the surface that is of the circuit board (2) and that faces the keys (3).

15. The keyboard (100) according to claim 13, wherein the first movable end (343a) of the first connecting piece (34a) is slidably connected to and rotatable relative to the first keycap (31a);
a center of rotation of the first connecting piece (34a) relative to the circuit board (2) is a first rotation center O₁, a center of rotation of the first connecting piece (34a) relative to the first keycap (31a) is a second rotation center O₂, a distance between the first rotation center O₁ and a bottom surface (23) of the circuit board (2) is a first height H₁, a distance between the second rotation center O₂ and the bottom surface (23) of the circuit board (2) is a second height H₂, and the bottom surface (23) of the circuit board (2) is a surface that is of the circuit board (2) and that faces away from the keys (3); and
when the first key (3a) is in the triggered state, H₁ and H₂ satisfy: H₁<H₂.

16. The keyboard (100) according to any one of claims 8 to 15, wherein the keyboard (100) comprises a first fastening base (32a) and a second fastening base (33a), and the first fastening base (32a) and the second fastening base (33a) are fastened on the circuit board (2) in a spaced manner;
the first rotating end (341a) of the first connecting piece (34a) comprises a first rotating portion (345a) and a second rotating portion (346a), the first rotating portion (345a) of the first connecting piece (34a) protrudes from a first end face (3441a) of the first gear portion (344a) of the first connecting piece (34a), the second rotating portion (346a) of the first connecting piece (34a) protrudes from a second end face (3442a) of the first gear portion (344a) of the first connecting piece (34a), and the first end face (3441a) and the second end face (3442a) of the first gear portion (344a) of the first connecting piece (34a) face away from each other; and
the first rotating portion (345a) of the first rotating end (341a) of the first connecting piece (34a) is rotatably connected to the first fastening base (32a), and the second rotating portion (346a) of the first rotating end (341a) of the first connecting piece (34a) is rotatably connected to the second fastening base (33a).

17. The keyboard (100) according to claim 16, wherein the first rotating end (341a) of the first connecting piece (34a) comprises a first stop portion (347a), the first stop portion (347a) of the first connecting piece (34a) protrudes from the first end face (3441a) of the first gear portion (344a) of the first connecting piece (34a), and the first fastening base (32a) is provided with a first stop groove (327a); and
when the first key (3a) is in the unpressed state, at least a part of the first stop portion (347a) of the first connecting piece (34a) is located in the first stop groove (327a) and abuts against a bottom wall of the first stop groove (327a); or
when the first key (3a) is in the triggered state, the first stop portion (347a) is separated from a bottom wall of the first stop groove (327a).

18. The keyboard (100) according to claim 17, wherein the first stop portion (347a) of the first connecting piece (34a) is located on a side that is of the first rotating portion (345a) of the first connecting piece (34a) and that is away from the first movable end (343a) of the first connecting piece (34a).

19. The keyboard (100) according to any one of claims 1 to 18, wherein the circuit board (2) comprises a plurality of triggering ends (21); and
the keyboard (100) further comprises a plurality of triggering pieces (5), the plurality of triggering pieces (5) are located between the plurality of keys (3) and the plurality of triggering ends (21) in one-to-one correspondence, and when the key (3) is in the triggered state, the key (3) squeezes the triggering end (21) of the circuit board (2) through the triggering piece (5), and the circuit board (2) generates an electrical signal.

20. The keyboard (100) according to claim 19, wherein the plurality of triggering pieces (5) are fastened on the plurality of triggering ends (21) in one-to-one correspondence.

21. The keyboard (100) according to claim 19, wherein the triggering piece (5) is an elastic piece, and when the key (3) is in the triggered state, the triggering piece (5) is in a compressed state.

22. An electronic device (1000), comprising a display apparatus (200) and the keyboard (100) according to any one of claims 1 to 21, wherein the keyboard (100) is in communication connection to the display apparatus (200).
